# EUROPEAN PATENT APPLICATION

(11) **EP 4 811 848 A1**
(43) Date of publication of application: **23.09.2026**
(21) Application number: 23958530.0
(22) Date of filing: 14.11.2023
(51) Int. Cl.: H04W 16/28

(54) **SIGNAL TRANSMISSION METHOD AND APPARATUS, AND TERMINAL DEVICE AND NETWORK DEVICE**

(71) Applicant: GUANGDONG OPPO MOBILE TELECOMMUNICATIONS CORP., LTD., Dongguan, Guangdong 523860 (CN)
(72) Inventor: LIU, Zhe, Dongguan, Guangdong 523860 (CN); CAO, Jianfei, Dongguan, Guangdong 523860 (CN)
(74) Representative: Penza, Giancarlo
(86) International application number: PCT/CN2023/131645
(87) International publication number: WO 2025/102248

(57) **Abstract**

The embodiments of the present application provide a signal transmission method and apparatus, and a terminal device and a network device. The method comprises: a first device detecting a first signal on the basis of a first transmission resource, wherein the first signal is a signal transmitted after a second signal sent by a second device is reflected and/or refracted by means of a third device, the second signal is detected on a second transmission resource, and the first transmission resource is different from the second transmission resource.

## Description

### TECHNICAL FIELD

The embodiments of the present disclosure relate to the technical field of mobile communication, in particular to a signal transmission method and device, a terminal device, and a network device.

### BACKGROUND

The intelligent surface devices, such as Large Intelligent Surfaces (LIS) devices or Reconfigurable Intelligent Surfaces (RIS), are emerging artificial material devices. Taking the RIS device as an example, the RIS device can dynamically/semi-statically change electromagnetic characteristics thereof, which affects the reflection/refraction behaviors of electromagnetic waves incident on the RIS device. The RIS device can control the reflected/refracted waves of the electromagnetic waves to realize functions such as beam scanning/beamforming.

A large number of intelligent surface devices may be deployed in the future wireless networks to replace the densely-deployed base stations. After the intelligent surface devices are introduced into the wireless network, the beam formed by the signal forwarded by the intelligent surface device may be different from the beam of the signal originally configured by the network device when the intelligent surface device is not introduced. How to configure the signal in the network for effective beam management is a technical problem to be solved urgently.

### SUMMARY

The present disclosure provides a signal transmission method and device, a terminal device and a network device, which can realize a beam management function after an intelligent surface device is introduced.

A first aspect provides a signal transmission method, which includes an operation as follows.

A first device detects a first signal based on a first transmission resource. The first signal is a signal transmitted after a second signal transmitted by a second device is reflected and/or refracted by the third device. The second signal is detected on a second transmission resource. The first transmission resource is different from the second transmission resource.

A second aspect provides a signal transmission method, which includes an operation as follows.

A second device transmits a second signal on a second transmission resource. The second transmission resource is different from a first transmission resource, and the first transmission resource is used for transmitting a first signal, and the first signal is a signal transmitted after the second signal is reflected and/or refracted by a third device.

A third aspect provides a signal transmission method, which includes an operation as follows.

A third device transmits a first signal on a first transmission resource. The first signal is a signal transmitted after a second signal transmitted by a second device is reflected and/or refracted by the third device. The second signal is detected on a second transmission resource, and the first transmission resource is different from the second transmission resource.

A fourth aspect provides a signal transmission device applied to a first device, which includes a first receiving unit.

The first receiving unit is configured to detect a first signal based on a first transmission resource. The first signal is a signal transmitted after a second signal transmitted by a second device is reflected and/or refracted by the third device. The second signal is detected on a second transmission resource. The first transmission resource is different from the second transmission resource.

A fifth aspect provides a signal transmission device applied to a second device, which includes a second transmitting unit.

The second transmitting unit is configured to transmit a second signal on a second transmission resource. The second transmission resource is different from a first transmission resource, and the first transmission resource is used for transmitting a first signal, and the first signal is a signal transmitted after the second signal is reflected and/or refracted by a third device.

A sixth aspect provides a signal transmission device applied to a third device, which includes a third transmitting unit.

The third transmitting unit is configured to transmit a first signal on a first transmission resource. The first signal is a signal transmitted after a second signal transmitted by a second device is reflected and/or refracted by the third device. The second signal is detected on a second transmission resource, and the first transmission resource is different from the second transmission resource.

A seventh aspect provides a communication device, and the network device includes a processor and a memory. The memory is configured to store a computer program, and the processor is configured to call and run the computer program stored in the memory to perform the signal transmission method according to any one of the first to third aspects above.

An eighth aspect provides a computer-readable medium having program codes stored thereon, the program codes are executed by a terminal and includes instructions for performing the signal transmission method of any one of the first to third aspects.

A ninth aspect provides a system chip including an input interface, an output interface, a processor and a memory. The processor is configured to execute codes in the memory, and when the codes are executed, the processor can implement the signal transmission method according to any of the first to third aspects.

In the signal transmission method provided by the present disclosure, the first device may detect a first signal based on a first transmission resource. The first signal is a signal transmitted after the second signal transmitted by the second device is reflected and/or refracted by the third device. The second signal is detected on a second transmission resource. The first transmission resource is different from the second transmission resource. That is, the first device may detect the first signal forwarded by the third device on a transmission resource different from that of the second signal directly transmitted by the second device. In this way, the first device may perform beam management based on the detected first signal, thereby realizing the beam management function after the intelligent surface device is introduced.

### BRIEF DESCRIPTION OF THE DRAWINGS

The accompanying drawings described herein are intended to provide a further understanding of the present disclosure, and constitute a part of the present disclosure, and the schematic embodiments of the present disclosure and the description thereof are intended to explain the present disclosure, and do not constitute an undue limitation of the present disclosure. In the drawings:
FIG. 1 is a schematic diagram of a communication architecture according to an embodiment of the present disclosure;
FIG. 2 is a schematic diagram of a timing structure of an SSB according to an embodiment of the present disclosure;
FIG. 3 is a first schematic flow diagram of a signal transmission method according to an embodiment of the present disclosure;
FIG. 4 is a schematic diagram of an application scenario according to an embodiment of the present disclosure;
FIG. 5 is a first schematic diagram of a time-frequency resource according to an embodiment of the present disclosure;
FIG. 6A is a second schematic diagram of a time-frequency resource according to an embodiment of the present disclosure;
FIG. 6B is a third schematic diagram of a time-frequency resource according to an embodiment of the present disclosure;
FIG. 6C is a fourth schematic diagram of a time-frequency resource according to an embodiment of the present disclosure;
FIG. 7 is a second schematic flowchart of a signal transmission method according to an embodiment of the present disclosure;
FIG. 8 is a fifth schematic diagram of a time-frequency resource according to an embodiment of the present disclosure;
FIG. 9 is a sixth schematic diagram of a time-frequency resource according to an embodiment of the present disclosure;
FIG. 10 is a seventh schematic diagram of a time-frequency resource according to an embodiment of the present disclosure;
FIG. 11 is a schematic structural diagram of a signal transmission device 1100 according to an embodiment of the present disclosure;
FIG. 12 is a schematic structural diagram of a signal transmission device 1200 according to an embodiment of the present disclosure;
FIG. 13 is a schematic structural diagram of a signal transmission device 1300 according to an embodiment of the present disclosure;
FIG. 14 is a schematic structural diagram of a communication device according to an embodiment of the present disclosure;
FIG. 15 is a schematic structural diagram of a chip according to an embodiment of the present disclosure; and
FIG. 16 is a schematic block diagram of a communication system according to an embodiment of the present disclosure.

### DETAILED DESCRIPTION

Hereinafter, the technical solutions in the embodiments of the present disclosure will be described with reference to the accompanying drawings in the embodiments of the present disclosure, and it is apparent that the described embodiments are a part rather than all of the embodiments of the present disclosure. Based on the embodiments in the present disclosure, all other embodiments obtained by those skilled in the art without creative work fall within the scope of protection of the present disclosure.

The technical solution of the embodiment of the present disclosure can be applied to various communication systems, such as a Long Term Evolution (LTE) system, an LTE Time Division Duplex (TDD), a Universal Mobile Telecommunication System (UMTS), an Internet of Things (IoT) system, and a Narrow Band Internet of Things (NB-IoT) System, enhanced Machine-Type Communications (eMTC) system, a 5G communication system (also referred to as a New Radio (NR) communication system), or a future communication system, etc.

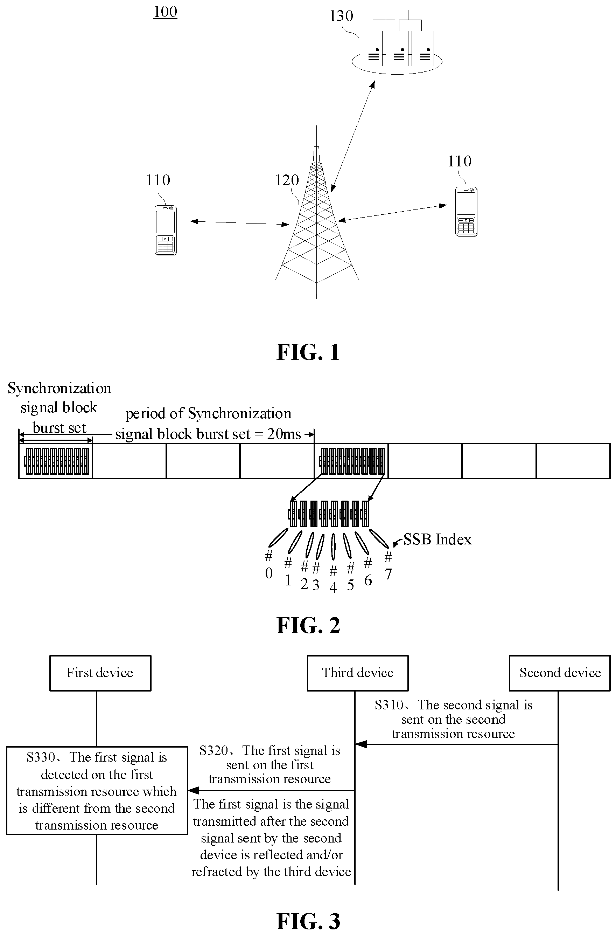

FIG. 1 is a schematic diagram of a communication architecture according to an embodiment of the present disclosure. As shown in FIG. 1, the communication system 100 may include a terminal device 110 and a network device 120. The network device 120 may communicate with the terminal device 110 through an air interface. Multi-service transmission is supported between the terminal device 110 and the network device 120.

It should be understood that the embodiment of the present disclosure is only illustrated with reference to the communication system 100, but the embodiment of the present disclosure is not limited thereto.

In the communication system 100 illustrated in FIG. 1, the network device 120 may be an access network device that communicates with the terminal device 110. The access network device may provide communication coverage for a particular geographic area and may communicate with a terminal device 110 (e.g., a UE) located within that coverage area.

The network device 120 may be an Evolutional Node B, eNB, or eNodeB in the Long-Term Evolution (LTE) system, a Next Generation Radio Access Network (NG RAN) device, a base station (gNB) in the NR system, a radio controller in a Cloud Radio Access Network (CRAN). Alternatively, the network device 120 may be a relay station, an access point, an in-vehicle device, a wearable device, a hub, a switch, a bridge, a router, or a network device in a future evolutional Public Land Mobile Network (PLMN).

The terminal device 110 may be any terminal device including, but not limited to, a terminal device connected with the network device 120 or other terminal devices using wired or wireless connections.

For example, the terminal device 110 may refer to an access terminal, a User Equipment (UE), a subscriber unit, a subscriber station, a mobile station, a mobile terminal, a remote station, a remote terminal, a mobile device, a user terminal, a terminal, a wireless communication device, a user agent, or a user device. The access terminal may be a cellular telephone, a cordless telephone, a Session Initiation Protocol (SIP) telephone, an IoT device, a satellite handheld terminal, a Wireless Local Loop (WLL) station, a Personal Digital Assistant (PDA), a handheld device having wireless communication functionality, a computing device or other processing device connected to a wireless modem, a vehicle-mounted device, a wearable device, a terminal device in the 5G network, or a terminal device in a future evolutional network, or the like.

The wireless communication system 100 may further include a core network device 130 that communicates with the network device 120, which may be a 5G Core (5GC) device, for example, an Access and Mobility Management Function (AMF), an Authentication Server Function (AUSF), a User Plane Function (UPF), a Session Management Function (SMF). Alternatively, the core network device 130 may also be an Evolved Packet Core (EPC) device of the LTE network, for example, a Session Management Function + Core Packet Gateway (SMF + PGW-C) device of the core network. It should be understood that the SMF + PGW-C may simultaneously implement functions of the SMF and the PGW-C. In the process of network evolution, the above core network device may be called as other names, or a new network entity may be formed by dividing the functions of the core network, which is not limited by the embodiments of the present disclosure.

The respective functional units in the communication system 100 may also establish a connection with each other through a next generation network (NG) interface for communication.

FIG. 1 exemplarily illustrates one network device, one core network device, and two terminal devices. Optionally, the wireless communication system 100 may include a multiple network device. and another number of terminal devices may be included within the coverage range of each network device, which is not limited by the embodiment of the present disclosure.

It should be noted that FIG. 1 only exemplarily illustrates a system applicable to the present disclosure, and of course, the method shown in the embodiment of the present disclosure can also be applied to other systems. Further, the terms "system" and "network" are often used interchangeably herein. Herein, the term "and/or" is only an association relationship describing objects, and means that there may be three relationships, for example, A and/or B may mean that A alone exists, A and B simultaneously exist, and B alone exists. In addition, the character "/" herein generally indicates that the previous and subsequent objects are in an "or" relationship. It should also be understood that the "indication" mentioned in the embodiments of the present disclosure may be a direct indication, an indirect indication, or an associated relationship. For example, A indicates B, which may mean that A directly indicates B, for example, B can be acquired by A, or may also mean that A indicates B indirectly, for example A indicates C, and B can be acquired through C, or may also indicate that there is an association relationship between A and B. It should also be understood that "correspondence" mentioned in the embodiments of the present disclosure may indicate that there is a direct correspondence or indirect correspondence between the two objects, may indicate that there is a correlation relationship between the two objects, or may indicate a relationship between indicating and being indicated, configuring and being configured, or the like. It should also be understood that the "predefined" or "predefined rules" mentioned in the embodiments of the present disclosure may be implemented by storing corresponding codes, tables, or other methods for indicating relevant information in advance in devices (e.g., including terminal devices and network devices), which is not limited in the present disclosure. For example, predefining may refer to defined in the protocol. It should also be understood that in the embodiment of the present disclosure, the "protocol" may refer to a standard protocol in the field of communication, and may include, for example, an LTE protocol, an NR protocol, and related protocols applied to future communication systems, which is not limited in the present disclosure.

In order to facilitate understanding of the technical solutions of the embodiments of the present disclosure, the related technologies of the embodiments of the present disclosure are described below, and the following related technologies below can be, as an option, arbitrarily combined with the technical solutions of the embodiments of the present disclosure, and all of them belong to the scope of protection of the embodiments of the present disclosure.

### 1. Random access process

The terminal device may acquire a Master information block (MIB) transmitted by the network device by searching for a synchronization signal and a physical broadcast channel (SSB) and PBCH. Further, the terminal device may acquire the time domain resources and the frequency domain resources of the Control resource set (CORESET) according to the MIB, and the terminal device may detect Downlink control information (DCI) of the scheduling system information block (SIB) on the time domain resources and the frequency domain resources of the CORESET, and receive the SIB1 at the time-frequency position indicated by the DCI. In this way, the terminal device can acquire an initial uplink bandwidth part (Initial UL BWP), an initial downlink bandwidth part (Initial DL BWP), a random access preamble list, a random access occasion (RACH occasion, RO) list and other information indicated in the SIB 1.

Further, the terminal device may transmit, according to SIB1, a Physical Random-Access Channel (PRACH) carrying a random access preamble in an RO resource associated with an SSB.

### 2. SSB

An SSB may include a primary synchronization signal (PSS), a secondary synchronization signal (SSS) and a Physical broadcast channel (PBCH) distributed on four consecutive Orthogonal frequency division multiplex (OFDM) symbols. Referring to the schematic diagram of the SSB timing structure shown in FIG. 2, one SSB burst set cycle includes a plurality of SSBs (for example, including eight SSBs), and different SSBs may correspond to different beam directions. The SSB burst set cycle supported by the NR are 5 milliseconds (ms), 10ms, 20ms, etc.

The distinctive feature of the NR cell is that the NR cell supports downlink multibeam. Before the network device communicates with the terminal device, the network device needs to know the beam where the terminal device is located, and then set an appropriate beam direction in the subsequent data transmission process. Since the PRACH is the first piece of information sent by the terminal device to the network device in the random access process, and the network device needs to know the beam information of the terminal device when sending the message 2 (Msg2) in the random access process. Therefore, the PRACH is responsible for reporting the beam in which the terminal device is located.

Since the random access preamble sequence (preamble) carried by PRACH is a sequence signal, the preamble cannot explicitly carry information, but can implicitly carry beam information using time-frequency resources occupied by the preamble or different preamble sequences. Therefore, the NR system needs to establish a mapping relationship between the SSB and the RO.

Before the terminal device initiates random access, the terminal device may measure and evaluate the signal quality of the cell and the signal strength of each SSB in the cell. When initiating the PRACH, the terminal device may transmit a preamble on the RO corresponding to the SSB which has the strongest or stronger signal. When the preamble is received successfully by the network device, the network device acquires downlink beam information of the terminal device based on the RO where the preamble is located, and perform subsequent communication (such as transmitting Msg2 and Msg4) by using the beam information.

It should be understood that there are multiple possible mapping relationships between SSB and RO: 1) one-to-one mapping; 2) Many-to-one mapping; 3) One-to-many mapping. Considering diversified scenarios, the three mapping relationships are supported in the NR criteria. For example, multiple SSBs may correspond to one RO in a scenario having a few of users, to save PRACH resources, and one SSB may correspond to multiple ROs in a scenario having many users, to provide sufficient PRACH capacity.

In practical applications, there are multiple actually transmitted SSBs, multiple configured RO resources and preamble resources in the NR system, and the network device and the terminal device each should know which RO resources and preamble resources each SSB corresponds to. Based on this, the standard specifies a rule for a mapping order of the SSB with the RO and the preamble resource as follows.

First, the order of indexes of the preambles in a PRACH occasion is ascending;

Second, the order of indexes of frequency resources which frequency-multiplexes the PRACH occasion is ascending;

Third, the order of indexes of time-domain resources which time-multiplexes the PRACH occasion in the PRACH slot is ascending;

Fourth, the order of indexes of the PRACH slots is ascending.

### 3. Intelligent surface

For example, Large Intelligent Surfaces (LIS) or Reconfigurable Intelligent Surfaces (RIS) are emerging artificial material devices.

Intelligent surfaces are an emerging artificial material technology. There are the following related terms, which indicate similar technologies or entities. These terms include: a Large Intelligent Surface (LIS), a Smart Reflect Array (SRA), a Reconfigurable Reflect Array (RRA), an Intelligent Reflecting Surface (IRS), a Reconfigurable Intelligent Surfaces (RIS). For simplicity, RIS will be used to explain later.

The RIS device can dynamically/semi-statically change electromagnetic characteristics thereof, which affects the reflection/refraction behavior of electromagnetic waves incident on the RIS device. The RIS device controls the reflected/refracted waves of electromagnetic waves to realize functions such as beam scanning/beamforming. It can be understood that the RIS device forwards the downlink signal transmitted by the network device to the terminal device using the analog beam forwarding method, and accordingly, forwards the uplink signal of the terminal device to the network device.

Since the radio frequency and baseband processing circuits are not required, the RIS devices have advantages of lower cost and implementation complexity, lower power consumption, smaller thickness, smaller weight, no introducing additional receiving terminal thermal noise and flexible deployment, in comparison with traditional wireless communication transceiver devices.

It should be understood that the terminal device often dynamically selects an optimal beam for communication with the network device based on signal quality. For example, the network device periodically transmits a signal burst set (for example, an SSB burst set, a CSI-RS burst set) in a beam scanning manner. That is, the network device transmits different signals on different beams in a time division multiplexing manner, and correspondingly, the terminal device may measure the signals, and select a beam corresponding to a signal whose measurement result meets the condition as an optimal beam for communication.

In the future wireless network, a large number of RIS devices may be deployed to instead densely deployed base stations. For example, the RIS device may be used to forward the signal (e.g., SSB or CSI-RS) of the network device for coverage enhancement. However, the beam formed by the signal forwarded by the RIS device after the RIS device is introduced may be different from the beam of the signal originally configured by the network device when the RIS device is not introduced. How to configure the signal in the network for effective beam management is a technical problem to be solved urgently.

Based on this, an embodiment of the present disclosure provides a signal transmission method, in which a first device may detect a first signal based on a first transmission resource. The first signal is a signal transmitted after a second signal transmitted by a second device is reflected and/or refracted by a third device. The second signal is detected on a second transmission resource. The first transmission resource is different from the second transmission resource. That is, the first device may detect the first signal forwarded by the third device on a transmission resource different from that of the second signal directly transmitted by the second device. In this way, the first device may perform beam management based on the detected first signal, thereby realizing beam management function after the introduction of the intelligent surface device.

In order to facilitate understanding of the technical solutions of the embodiments of the present disclosure, the technical solutions of the present disclosure will be described in detail below with reference to specific embodiments. The above related technologies may be, as an optional solution, arbitrarily combined with the technical solutions of the embodiments of the present disclosure, and all of them belong to the scope of protection of the embodiments of the present disclosure. The embodiments of the present disclosure include at least some of the following.

FIG. 3 illustrates a signal transmission method according to an embodiment of the present disclosure, and the method may include following operations.

At S310, the second device transmits a second signal on a second transmission resource.

At S320, the third device transmits a first signal on a first transmission resource, and the first signal is a signal transmitted after the second signal transmitted by the second device is reflected and/or refracted by the third device.

At S330, the first device detects the first signal based on the first transmission resource. The first transmission resource is different from the second transmission resource.

In some embodiments, the first device is a terminal device, the second device is a network device, and the third device is an intelligent surface device, such as an RIS device. Alternatively, the first device is a network device, the second device is a terminal device, and the third device is an intelligent surface device.

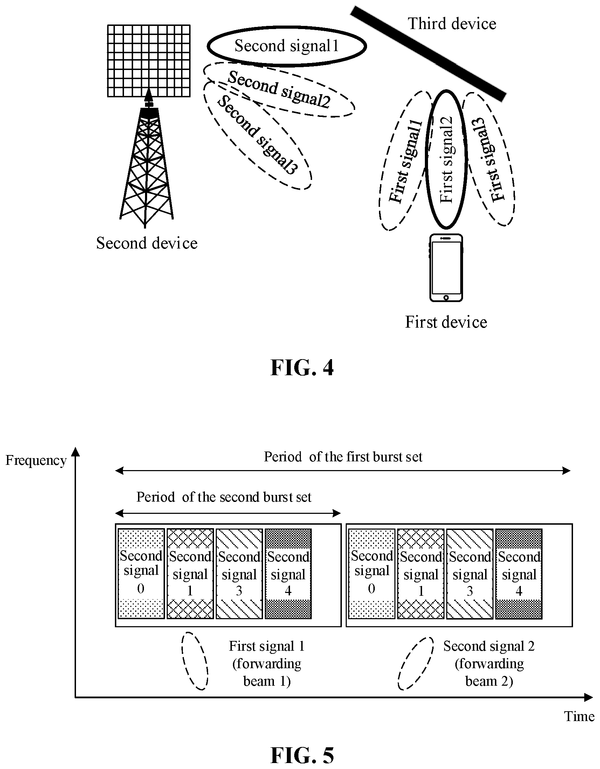

It can be understood that the third device may implement forwarding of signals between the first device and the second device. Exemplarily, FIG. 4 shows a schematic diagram of an application scenario implemented by the present disclosure. The third device may receive a second signal transmitted by the second device, reflect and/or refract the second signal to form a first signal. Then, the third device may transmit the first signal to the first device.

The first signal and the second signal may be signals of the same type. In the embodiment of the present disclosure, the first signal and the second signal may be reference signals for beam management, and for example, the first signal and the second signal may be an SSB, a Channel State Information Reference Signal (CSI-RS), a Sounding Reference Signal (SRS), or the like, which is not limited in the embodiment of the present disclosure.

In an embodiment of the present disclosure, the second device may transmit the second signal on the second transmission resource. The third device may transmit, on the first transmission resource, a first signal formed after the second signal is reflected and/or refracted. That is, the second signal is a signal directly transmitted by the second device, and the first signal is a signal forwarded by the third device.

It should be noted that the second device may transmit multiple second signals on the second transmission resource, respectively corresponding to different original beam directions. Accordingly, the third device may forward the second signals and transmit multiple first signals on the first transmission resource, respectively corresponding to different forwarding beam directions. Referring to FIG. 4, the second device may transmit four second signals, which are a second signal 1, a second signal 2, a second signal 3, and a second signal 4, respectively. The third device may transmit three first signals, which are, the first signal 1, the first signal 2, and the first signal 3, on the first transmission resource, respectively corresponding to different forwarding beams, to realize forwarding of the second signals.

It should be understood that the first device may detect the first signal on the first transmission resource. The first device may receive multiple first signals having different signal strengths on the first transmission resource, and further, the first device may select a beam corresponding to the first signal having the strongest signal strength and a beam corresponding to the second signal associated with the first signal, to determine a beam for communication between the second device and the third device and a beam for communication between the third device and the second device.

Exemplarily, referring to FIG. 4, the first device detects that the first signal 2 has the strongest signal strength, and the first signal 2 may be associated with the second signal 1. In this case, the first device may select the forwarding beam corresponding to the first signal 2 and the original beam corresponding to the second signal 1 to form a beam for communication between the first device, the second device and the third device.

In an embodiment of the present disclosure, the first device may detect the second signal on the second transmission resource. Considering the physical location relationship between the second device and the first device, the first device may be unable to detect the second signal in some scenarios.

It should be noted that the transmission resources (for example, the first transmission resources and the second transmission resources) mentioned in the embodiments of the present disclosure may include time domain resources and/or frequency domain resources.

It should also be noted that the first transmission resource in the embodiment of the present disclosure is different from the second transmission resource. The difference between the first transmission resource and the second transmission resource may mean that the time domain resource of the first transmission resource is different from the time domain resource of the second transmission resource, and/or the frequency domain resource of the first transmission resource is different from the frequency domain resource of the second transmission resource.

In a possible implementation, the first device may detect the first signal on the same time domain resource as the second transmission resource and a frequency domain resource different from the second transmission resource. That is, the frequency resource may be extended on the basis of the originally configured second transmission resource to detect the first signal, thereby traversing the forwarding beams of the third device.

In another possible implementation, the first device may detect the first signal on the same frequency domain resource as the second transmission resource and a time domain resource different from the second transmission resource. That is, the time domain resource may be extended on the basis of the originally configured second transmission resource to detect the first signal, thereby traversing the forwarding beams of the third device in the time domain.

In yet another possible implementation, the first device may detect the first signal on a time domain resource and a frequency domain resource different from the second transmission resource. It can be understood that the frequency domain resource and the time domain resource may be extended on the basis of the originally configured second transmission resource to detect the first signal.

It should be noted that the first transmission resource and the second transmission resource may be predefined, or may be determined according to a preset rule, or may be configured by a network, which is not limited in the embodiment of the present disclosure. For example, if the second signal is an SSB, the first device may obtain the second signal through cell search, that is, the second transmission resource for detecting the second signal may be predefined by the protocol.

The first transmission resource may be related to the second transmission resource, for example, a frequency domain offset between the frequency domain position of the first transmission resource and the frequency domain position of the second transmission resource is a preset value, or a time domain position of the first transmission resource is determined based on the time domain position of the second transmission resource. In addition, the first transmission resource may be independent of the second transmission resource, and the first transmission resource may be independently configured, which is not limited in the embodiments of the present disclosure.

It can be understood that in the embodiment of the present disclosure, the first device may detect the first signal forwarded by the third device on a transmission resource different from that of the second signal directly transmitted by the second device. In this way, the first device may perform beam management based on the detected first signal, for realizing the beam management function after the intelligent surface device is introduced.

There are multiple ways of determining the first transmission resource.

In a method for determining a first transmission resource according to an embodiment of the present disclosure, the first transmission resource is different from the second transmission resource, and the time domain resource of the first transmission resource may be different from the time domain resource of the second transmission resource. The time domain resource of the first transmission resource may be determined based on the time domain resource of the second transmission resource.

In some embodiments, the first signal and the second signal may be burst set signals. Among them, the first signal may correspond to a first burst set, and it should be understood that the first burst set may include multiple first signals (corresponding to different signal indexes), and different first signals correspond to different beam directions. That is, the third device may repeatedly transmit the first burst set according to a time period to realize beam scanning within a service range thereof. In the embodiment of the present disclosure, the period of the first burst set is set as the first time period.

In addition, the second signal corresponds to a second burst set, and it should be understood that the second burst set may include multiple second signals, and different second signals may correspond to different beam directions. That is, the second device may repeatedly transmit the second burst set according to a period to realize beam scanning within the service range thereof. In the embodiment of the present disclosure, the period of the second burst set is set as the second time period.

It can be understood that a case that the time domain resource of the first transmission resource is different from the time domain resource of the second transmission resource may include that the first time period is different from the second time period. That is, a case that the time domain resource of the first transmission resource is different from the time domain resource of the second transmission resource may mean that the period of the first burst set corresponding to the first signal is different from the period of the second burst set corresponding to the second signal.

The first time period may be determined based on the second time period and the number of first signals included in the first burst set. That is, the period of the first burst set corresponding to the first signal may be determined based on the period of the second burst set corresponding to the second signal and the number of first signals included in the first burst set.

For example, if the second time period is m time units and the number of first signals included in the first burst set is n, the first time period is at most (i.e., less than or equal to) m*n time units. m and n are both integers greater than 0. In addition, the time unit in the embodiment of the present disclosure may be a time slot, a frame, a half frame, a subframe, or the like, which is not limited in the embodiment of the present disclosure.

It can be understood that the n first signals included in the first burst set may correspond to n forwarding beams of the third device. The third device may forward all the second signals in the second burst set by using some or all of the n forwarding beams.

For example, referring to the schematic diagram of the time-frequency resources shown in FIG. 5, the period of the second burst set corresponding to the second signal is 5ms, and the number of first signals included in the first burst set corresponding to the first signal is 2 (that is, the third device is configured with 2 forwarding beams: forwarding beam 1 and forwarding beam 2). Accordingly, the period of the first burst set corresponding to the first signal is 10ms. It can be understood that the third device may first forward the respective second signals in the second burst set in the beam direction corresponding to the forwarding beam 1, and then forward the respective second signals in the second burst set in the beam direction corresponding to the forwarding beam 2.

It should be noted that the above-described parameters (that is, the above-described second time period, and/or the number of first signals included in the first burst set) for determining the first transmission resource may be predefined by the protocol or configured by the network device.

Exemplarily, the second device may transmit the first configuration information, and accordingly, the first device may receive the first configuration information. The second time period and/or the number of first signals included in the first burst set are configured by the first configuration information. In this way, the first device may determine a first transmission resource for detecting the first signal based on the first configuration information.

It should be noted that the third device may also receive the first configuration information and determine a first transmission resource for transmitting the first signal based on the first configuration information.

Here, the first configuration information may be carried by broadcast signaling, for example, by SIB or MIB.

With this method, the period of the second burst set can be added, for realizing beam scanning of each forwarding beam in the third device. In this way, the first device may detect the first signal based on the first time period, and determine a beam corresponding to the first signal based on a measurement result of the first signal, for realizing beam management.

In another method for determining the first transmission resource according to the embodiment of the present disclosure, a case that the first transmission resource is different from the second transmission resource may include that the frequency domain resource of the first transmission resource is different from the frequency domain resource of the second transmission resource. A frequency domain location of the first transmission resource may be determined based on one or more of:
a first frequency domain location;
a frequency domain location of the second transmission resource and a first frequency domain offset;
a frequency domain position of a downlink Bandwidth Part (BWP) and a second frequency domain offset; and
a BWP corresponding to the second signal.

In some embodiments, the frequency domain position of the first transmission resource may be a fixed first frequency domain position. The first frequency domain position may be predetermined or may be preconfigured by the network, which is not limited in the embodiment of the present disclosure.

In some embodiments, the frequency domain position of the first transmission resource may be determined based on the frequency domain position of the second transmission resource and the first frequency domain offset.

It can be understood that the frequency domain position of the first transmission resource may be the sum of a frequency domain position reference point of the second transmission resource and the first frequency domain offset.

The unit of the first frequency domain offset may be a Resource Block (RB) or a Resource Element (RE). In addition, the first frequency domain offset may be a positive number or a negative number, which is not limited in the embodiment of the present disclosure.

The frequency domain position reference point of the second transmission resource may be an RB/RE having the smallest index in the second transmission resource, or an RB/RE having the largest index in the second transmission resource. In other words, the frequency domain position reference point of the second transmission resource may be an RB/RE from which the second transmission resource starts or an RB/RE from which the second transmission resource ends. The frequency domain position reference point of the second transmission resource is not limited in the embodiment of the present disclosure.

In some embodiments, the frequency domain location of the first transmission resource may be determined based on the frequency domain location of the BWP of the first device and the second frequency domain offset.

It can be understood that the frequency domain position of the first transmission resource may be the sum of the frequency domain position reference point of the BWP of the first device and the second frequency domain offset. The frequency domain position reference point of the BWP of the first device may be an RB/RE having the smallest index in the BWP of the first device, or an RB/RE having the largest index in the BWP of the first device. Alternatively, the frequency domain position reference point of the BWP of the first device is the RB at which the BWP of the first device starts or the RB at which the BWP of the first device ends, which is not limited in the embodiment of the present disclosure.

The unit of the second frequency domain offset may be RB or RE. In addition, the second frequency domain offset may be a positive number or a negative number, which is not limited in the embodiment of the present disclosure.

It should also be noted that the BWP of the first device may be an uplink BWP of the first device or a downlink BWP of the first device, which is the embodiment of the present disclosure.

In some embodiments, the frequency domain location of the first transmission resource may be further determined based on a BWP corresponding to the second signal. Exemplarily, the first signal and the second signal may be located on the same BWP and on different frequency domain resources.

In an embodiment of the present disclosure, the time domain resource of the first transmission resource is the same as the time domain resource of the second transmission resource, and the multiple first signals included in the first burst set corresponding to the first signal may have a correspondence relationship with the multiple second signals included in the second burst set corresponding to the second signal.

The case that the time domain resource of the first transmission resource is the same as the time domain resource of the second transmission resource may be understood that the time domain resource for detecting multiple first signals in the first transmission resource is the same as the time domain resource for detecting multiple second signals in the second transmission resource.

It should be understood that the third device may forward the multiple second signals (corresponding to the second burst set) transmitted by the second device, and transmit the multiple first signals (corresponding to the first burst set) on the first transmission resource. Therefore, there is a correspondence relationship between the multiple second signals and the multiple first signals.

In a possible implementation, when the number of the multiple first signals included in the first burst set is the same as the number of the multiple second signals included in the second burst set, the multiple first signals may have a one-to-one correspondence with the multiple second signals.

Here, a case that the number of the multiple first signals in the first burst set is the same as the number of the multiple second signals included in the second burst set may be understood that the number of original beams corresponding to the second device is the same as the number of forwarding beams of the third device. In this case, one original beam may correspond to one forwarding beam.

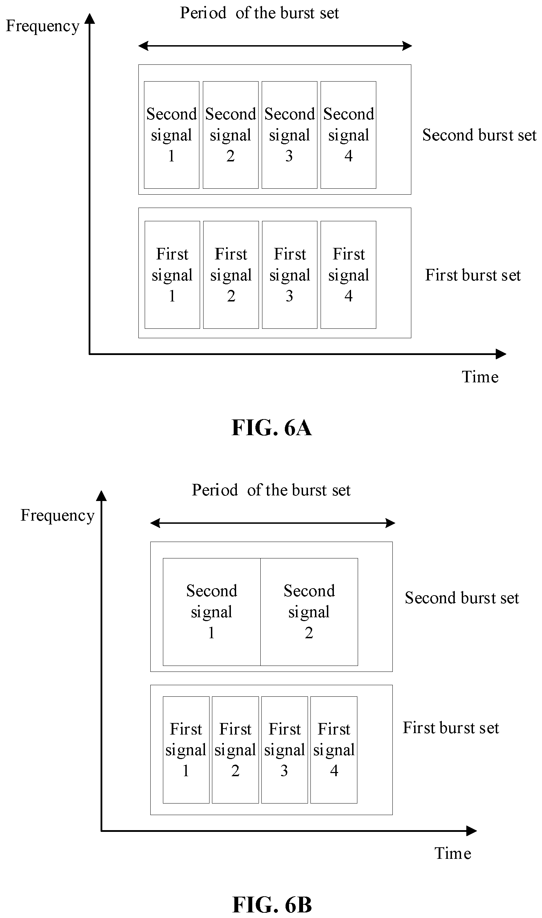

Note that a case that the multiple first signals may have a one-to-one correspondence with the multiple second signals may be that two signals having the same index correspond to each other. For example, referring to FIG. 6A, a first signal having an index 1 corresponds to a second signal having an index 1, a first signal having an index 2 corresponds to a second signal having an index 2, and so on. Further, the case that the multiple first signals may have a one-to-one correspondence with the multiple second signals may also be that the first signal having the smallest index corresponds to the second signal having the largest index, and the first signal having the second smallest index corresponds to the second signal having the second largest index. Exemplarily, referring to FIG. 6A, a first signal having an index 1 corresponds to a second signal having an index 4, a first signal having an index 2 corresponds to a second signal having an index 3, and so on. The above correspondence relationship is not limited in the embodiments of the present disclosure.

In some embodiments, when the number of the multiple first signals included in the first burst set is different from the number of the multiple second signals included in the second burst set, the one or more first signals in the first burst set are associated with one second signal in the second burst set, or the one or more second signals in the second burst set are associated with one first signal in the first burst set.

The case that the number of the multiple first signals in the first burst set is different from the multiple second signals included in the second burst set may be understood that the number of original beams corresponding to the second device is different from the number of forwarding beams of the third device.

In some embodiments, if the number of first signals in the first burst set is greater than the number of second signals in the second burst set (i.e., the number of forwarding beams of the third device is greater than the number of original beams of the second device), one or more first signals may correspond to one second signal (i.e., the one or more forwarding beams correspond to one original beam).

Specifically, if the number of the first signals in the first burst set is p and the number of the second signals in the second burst set is q, p > q. In this case, the multiple first signals may correspond to the same second signal. Here, the second signal having an index 0 may correspond to multiple first signals having an index [0, floor (p/q) - 1], and so on.

For example, referring to FIG. 6B, the first signal 1 and the first signal 2 may correspond to the same second signal 1, and the first signal 3 and the first signal 4 may correspond to the second signal 2.

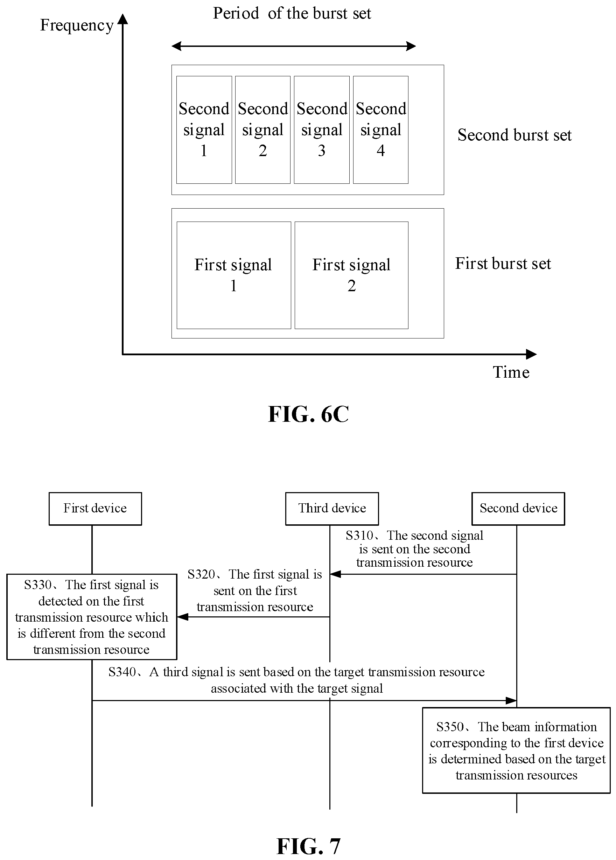

In some embodiments, if the number of first signals in the first burst set is less than the number of second signals in the second burst set (i.e., the number of forwarding beams of the third device is less than the number of original beams of the second device), one first signal may correspond to one or more second signals. For example, referring to FIG. 6C, the first signal 1 may correspond to the second signal 1 and the second signal 2, and the first signal 2 may correspond to the first signal 2 and the second signal 4.

By defining the above-described correspondence relationship, beam scanning of each forwarding beam in the third device can be realized. That is, by expanding the frequency domain resources, beam scanning of each forwarding beam in the third device can be realized without increasing the time delay. In this way, the first device may detect the first signal based on the extended frequency domain position, and determines a beam corresponding to the first signal according to the measurement result of the first signal, for realizing beam management.

It should be noted that the above parameters (that is, one or more of the first frequency domain position, the first frequency domain offset, the second frequency domain offset, and the BWP corresponding to the second signal described above) for determining the first transmission resource may be predefined or configured by a network device, which is not limited in the embodiment of the present disclosure.

Exemplarily, the second device may transmit the first configuration information, and accordingly, the first device may receive the first configuration information. The first configuration information may indicate one or more of:
a first frequency domain location;
a first frequency domain offset;
a second frequency domain offset; and
a bandwidth part corresponding to the second signal.

Based on this, the first device may determine the first transmission resource for detecting the first signal based on the first configuration information.

In some embodiments, the third device may also receive the first configuration information and determine the first transmission resource for transmitting the first signal based on the first configuration information.

The first configuration information may be carried by broadcast signaling, for example, by SIB or MIB.

The first configuration information is used to configure the first transmission resource. The first transmission resource is a resource used by the third device to transmit the first signal, and may be related to spatial relationship information of the third device. For example, the number of first signals included in the first burst set in the first configuration information may correspond to the number of forwarding beams of the third device. The number of forwarding beams of the third device may be determined based on the spatial relationship information of the third device.

Based on this, in an embodiment of the present disclosure, the second device may further include the following operations before transmitting the first configuration information.

The third device transmits capability information to the second device. Accordingly, the second device receives the capability information transmitted by the third device. The capability information indicates the spatial relationship information of the third device. The first configuration information may be determined based on the capability information.

In some embodiments, the capability information may include one or more of the following:
a phase of each RIS unit in the third device;
a beam set of reflected signals or refracted signals of the third device;
a beamforming pattern of the reflected signals or the refracted signals of the third device; and
a polarization manner of the reflected or refracted signals.

It should be noted that the beam set of the reflected signals or the refracted signals of the third device may include different directions (reflection, refraction, etc.) of the forwarding beams corresponding to different operation modes, and the number of beams.

In addition, the beamforming pattern of the reflected signals or the refracted signals of the third device can be obtained by switching the diode associated with the RIS unit on or off, that is, the different switch-on or switch-off patterns of diodes correspond to different beamforming patterns of the reflected signal or the refracted signal of the RIS, and thus correspond to different operating modes of the RIS.

The polarization mode of the reflected signal or the refracted signal of the third device may include horizontal polarization or vertical polarization. Different operating modes correspond to different polarization modes.

It can be seen that the third device can accurately configure the forwarding beam and the first transmission resource by reporting the capability information.

In an embodiment of the present disclosure, with reference to FIG. 7, the signal transmission method provided by the embodiment of the present disclosure further includes the following operations.

At S340, the first device transmits a third signal based on a target transmission resource associated with a target signal. Accordingly, the second device receives the third signal on the target transmission resource.

The target signal is one or more first signals detected by the first device, and/or one or more second signals detected by the first device which meet the first condition.

At S350, the second device determines beam information corresponding to the first device based on the target transmission resource.

The first condition includes, but is not limited to, a condition that the signal quality is the strongest or the signal quality meets a quality threshold. That is, the target signal may be one or more first signals detected by the first device, and/or a signal (which is denoted as the target signal in the embodiment of the present disclosure) having the strongest or stronger signal quality among one or more second signals detected by the first device.

It can be understood that different first signals and second signals may correspond to different beam directions, and the first device may select a target signal having the strongest or stronger channel quality from the detectable first signals and/or second signals. In this way, the first device may use the beam corresponding to the target signal as a beam for subsequent communication.

It should be noted that the first device may detect the first signal forwarded by the third device, and may detect the second signal directly transmitted by the second device.

In some embodiments, when the first device is capable of detecting the second signal, and if the measurement result of the one or more second signals detected by the first device is greater than or equal to the first threshold, the target signal is a signal that meets the first condition among the one or more second signals detected by the first device.

It should be understood that due to the physical location relationship between the second device and the first device, the second signal may not be detected by the first device in certain scenarios. If the second signal can be detected by the first device, and the measurement result of the detected second signal exceeds the first threshold, the first device may directly select one of the detected one or more second signals as the target signal.

It should be noted that the measurement result may include one or more of the following measurement parameters: Reference Signal Receiving Power (RSRP), Reference Signal Receiving Quality (RSRQ), Signal to Interference plus Noise Ratio (SINR) or the like, which is not limited in the embodiments of the present disclosure.

It should also be noted that the first threshold may include multiple thresholds (for example, a first RSRP threshold, a first RSRQ threshold, a first SINR threshold, and the like), and different first thresholds may correspond to different measurement parameters. The measurement result exceeds the first threshold may be understood as all the measurement parameters each exceeds the corresponding first threshold, or any one or more of the measurement parameters exceed the corresponding first threshold, which is not limited in the embodiment of the present disclosure.

It can be understood that when the measurement result of the second signal detected by the first device is higher than the first threshold, it means that there is no need for the third device to forward the second signal transmitted by the second device at present, and the first device can directly perform normal communication with the second device. In this case, the first device may directly select a second signal meeting the first condition among the detected one or more second signals as the target signal. In this way, the first device may use the beam corresponding to the target signal as a beam for direct communication with the second device.

It should be noted that the first threshold may be predefined or may be configured by the network. Exemplarily, the network device may configure the first threshold by broadcast signaling (e.g., SIB, MIB, etc.), higher layer signaling (e.g., RRC signaling, MAC CE signaling), or physical layer signaling (e.g., DCI signaling), which is not limited in the embodiment of the present disclosure.

In some embodiments, in case that the second signal can be detected by the first device, and if the measurement result of the one or more second signals detected by the first device is greater than or equal to the first threshold, and the measurement result of the one or more first signals is greater than or equal to the second threshold, the target signal is a signal that meeting the first condition among the one or more second signals detected by the first device.

It can be understood that the first device may comprehensively consider the measurement result of the first signal and the measurement result of the second signal, and determine whether the first device can directly communicate with the second device. In case that the measurement result of the detected second signal is greater than the first threshold, and the measurement result of the detected first signal is greater than the second threshold, that is, the detection results of the first signal and the second signal each is good, the first device does not need the third device to forward the signal of the second device, and the first device may directly communicate with the second device. In this way, the first device may directly select a second signal meeting the first condition among the detected one or more second signals as a target signal, and use a beam corresponding to the target signal as a beam for direct communication with the second device.

In some embodiments, in case that the second signal can be detected by the first device, if the measurement result of the one or more second signals detected by the first device is less than the first threshold, and the measurement result of the one or more first signals detected by the first device is greater than or equal to the second threshold, the target signal is a signal meeting the first condition among the one or more first signals detected by the first device.

It can be understood that if the measurement result of the second signal detected by the first device is less than the first threshold and the measurement result of the detected first signal is greater than the second threshold, it means that the channel quality between the first device and the second device is poor, and the channel quality between the first device and the third device is good, and in this case, the first device needs the third device to forward the signal transmitted by the second device. The first device may select, as the target signal, a first signal meeting the first condition from the detected one or more first signals. In this way, the first device may use the beam corresponding to the target signal as a beam for subsequent communication.

It should be noted that regarding the method of configuring the second threshold, reference may be made to the method of configuring the first threshold, and the description thereof will not be repeated here for the sake of simplicity. Here, the first threshold and the second threshold may be configured by the same signaling, or may be configured separately by different signaling, which is not limited in the embodiment of the present disclosure.

It should be noted that the first threshold and the second threshold may be the same value or different values, which is not limited in the embodiment of the present disclosure.

It can be understood that the first device may select a target signal having the strongest or stronger channel quality from the detectable first signal and/or second signal, and use a beam (including a forwarding beam and an original beam) corresponding to the target signal as a beam for subsequent communication. Further, the first device may notify the second device and the third device of the beam information, so that the second device and the third device can perform subsequent data transmission with the first device based on the beam information.

It should be noted that in some scenarios, the signal transmitted by the device cannot explicitly carry information. For example, in the random access process, since the random access preamble sequence (preamble) carried by the PRACH is a sequence signal, the preamble cannot explicitly carry information.

Based on this, in the embodiment of the present disclosure, the first device may implicitly indicate the beam information using a target transmission resource associated with the selected target signal. Specifically, the first device may transmit the third signal based on the target transmission resource associated with the target signal.

It should be noted that the third signal may be a PRACH, an uplink signal carrying a CSI report (which is obtained based on CSI-RS measurement), or other types of signals, which is not limited in the embodiment of the present disclosure.

In some embodiments, the target transmission resource may include a transmission occasion and/or a preamble. That is, the first device may implicitly indicate the selected beam information by using a transmission occasion and/or a preamble. For example, if the first signal and the second signal are SSBs, the target transmission resource may include an RO and/or a preamble. If the first signal and the second signal are CSI-RS, the target transmission resource may include a transmission occasion for transmitting a bearer CSI report.

In the related art, the NR system defines a mapping relationship of an SSB with an RO and a preamble, or a mapping relationship between a CSI-RS and a transmission occasion during communication between a network device and a terminal device. That is, the NR system specifies the mapping relationship between the second signal and the transmission resource in direct communication between the first device and the second device when the intelligent surface device (i.e., the third device) is not introduced.

Based on this, in the embodiment of the present disclosure, when the target signal is a signal selected by the first device from the detected one or more second signals (that is, in a scenario in which the first device can be directly communication with the second device without forwarding by the third device), the first device may determine the transmission resource associated with the selected second signal according to the above mapping relationship, to obtain the target transmission resource. As such, the first device may transmit the third signal to the second device based on the target transmission resource by which the beam information of the first device is implicitly indicated.

The mapping relationship between the second signal and the transmission resource may include multiple relationships. For example, in a scenario in which the second signal is an SSB and the transmission resource is an RO, the SSB and the RO may have one-to-one mapping, many-to-one mapping, one-to-many mapping or the like. In a scenario with fewer users, multiple SSBs may correspond to the same RO to save PRACH resources. In a scenario with many users, one SSB may correspond to multiple ROs to provide sufficient PRACH capacity.

It should be noted that the mapping relationship between the second signal and the transmission resource may be predefined by the protocol or configured by the network, which is not limited in the embodiment of the present disclosure. Exemplarily, the first device may determine the transmission resource of the second signal association based on access configuration information associated with the second signal. The access configuration information may include one or more of the following:
a random access configuration index, a random access configuration offset, a preamble, the number of SSBs mapped to each RACH RO, the number of sequences mapped to each SSB, and the number of ROs which are frequency-division-multiplexed within a time instance.

It should be noted that the random access herein may be a two-step RACH or a four-step RACH, which is not limited in the embodiment of the present disclosure.

The random access configuration information may configure an RO set for transmitting a random access sequence (preamble). The random access configuration offset includes a frame offset, a subframe offset, a slot offset and the like for changing a random access period and/or random access on the basis of a random access configuration index.

It should also be noted that the access configuration information may be carried by broadcast signaling, such as SIB1, MIB, etc., which is not limited in the embodiment of the present disclosure.

Based on the foregoing, since the NR system only specifies the mapping relationship between the second signal and the transmission resource. When the target signal is a signal selected by the first device from the detected one or more first signals (i.e., in a scenario in which the third device is required for forwarding), the target transmission resource associated with the target signal may be determined based on any of the following:
a preset rule;
second configuration information, the second configuration information is used to configure a transmission resource associated with each first signal; and
a transmission resource associated with a second signal corresponding to the target signal.

In a possible implementation, when the selected target signal is the first signal forwarded by the third device, the target transmission resource associated with the target signal may be determined based on a preset rule. The preset rule may include the following.

The target transmission resource is any transmission resource in the first transmission resource group among multiple transmission resource groups associated with the second signal corresponding to the target signal. The first transmission resource group is a transmission resource group associated with the target signal.

It should be understood that different first signals may be associated with different transmission resources. The transmission resource associated with the first signal may be related to the transmission resource associated with the second signal corresponding to the first signal.

It should be noted that the correspondence between the second signal and the first signal can be understood with reference to the description in the above-described embodiments, and for the sake of brevity, the description thereof will not be repeated here.

It should be understood that, as described above, the NR system defines a mapping relationship of an SSB with an RO and a preamble, or a mapping relationship between a CSI-RS and a transmission occasion in a communication process between a network device and a terminal device. That is, the NR system specifies the mapping relationship between the second signal and the transmission resource in direct communication between the first device and the second device when the intelligent surface device (i.e., the third device) is not introduced.

In some embodiments, the second signal may be associated with multiple transmission resource groups, and the multiple transmission resource group may be associated with different forwarding beams. That is, the multiple transmission resource groups associated with the second signal may be associated with different first signals.

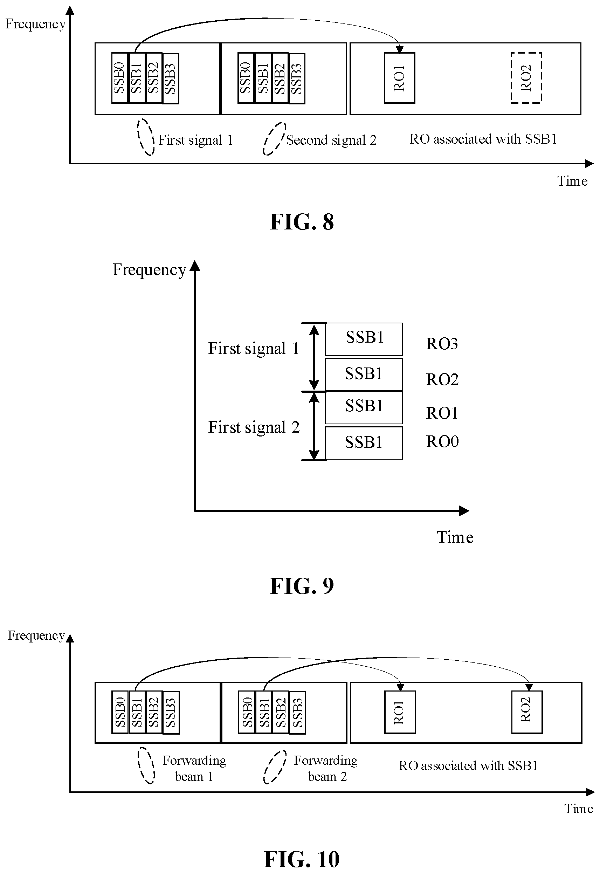

In an example, different first signals correspond to different transmission occasions. Referring to FIG. 8, the second signal SSB1 may be associated with two ROs, RO1 may be associated with the first signal 1 and RO2 may be associated with the first signal 2. If the first device detects that the first signal 1 (corresponding to the forwarding beam 1) is a signal meeting the first condition, the first device may transmit the PRACH at the RO corresponding to the SSB 1 + the first signal 1. Referring to FIG. 9, one SSB may be associated with four ROs, and the number of ROs for frequency division multiplexing in one time instance is four. When the number of first signals is 2, every two ROs are associated with one first signal. If the first device detects that the first signal 1 (corresponding to the forwarding beam 1) is a signal meeting the first condition, the first device may transmit the PRACH using any one of RO2 or RO3.

In another example, different first signals correspond to different preambles. When the second signal corresponds one RO and corresponds to multiple preambles, the preambles may be grouped. Different first signals correspond to different preamble indices or different index sets. For example, if one SSB corresponds to 32 preambles and if q = 2, the preamble index corresponding to the forwarding beam 0 ranges from 0 to 15, and the preamble index corresponding to the forwarding beam 1 ranges from 16 to 31.

According to this method, the first device transmits the third signal on only the transmission resource associated with the measured first signal, and thus can accurately report the beam (including the original beam and the forwarding beam) in which the first device is located.

In another possible implementation, when the selected target signal is the first signal forwarded by the third device, the target transmission resource associated with the target signal may be determined based on the second configuration information. The second configuration information may be used to configure a transmission resource associated with the first signal.

It can be understood that the network may directly configure transmission resources associated with different first signals.

Exemplarily, the network device employs k bits to indicate transmission occasions or preamble indexes associated with different first signals.

For example, if the first signal is an SSB, the second configuration information may include one or more of the following:
a random access configuration index, a random access configuration offset, a preamble, the number of SSBs mapped to each RACH RO, the number of sequences mapped to each SSB, and the number of ROs for frequency division multiplexing within a time instance.

It should be noted that the random access herein may be a two-step RACH or a four-step RACH, which is not limited in the embodiment of the present disclosure.

It should be noted that the random access configuration information may configure an RO set for transmitting a random access sequence (preamble). The random access configuration offset includes a frame offset, a subframe offset, a slot offset and the like for changing a random access period and/or random access on the basis of a random access configuration index.

It should also be noted that the access configuration information may be carried by broadcast signaling, such as SIB1, MIB or the like, which is not limited in the embodiment of the present disclosure.

With this method, the first device can transmit the third signal on the transmission resource associated with the measured first signal, and thus can accurately report the beam (including the original beam and the forwarding beam) in which the first device is located.

In yet another possible implementation, when the selected target signal is a first signal forwarded by the third device, the target transmission resource associated with the target signal may be a transmission resource associated with the second signal corresponding to the target signal.

It should be noted that the correspondence between the second signal and the first signal can be understood with reference to the description in the above-described embodiments, and the description thereof will not be repeated here for the sake of brevity.

It can be understood that the first device may directly use the transmission resource associated with the second signal corresponding to the target signal to transmit the third signal. That is, the first device may directly transmit the third signal using the transmission resource associated with the original beam without distinguish the transmission resource associated with the first signal, or distinguishing the forwarding beam. The beam in which the first device is located is reported by the transmission resource associated with the original beam.

In some embodiments, the first device may transmit the third signal N times using the transmission resource associated with the second signal corresponding to the target signal, where N is the number of candidate first signals in the first burst set corresponding to the first signal.

For example, with reference to FIG. 10, the first device may transmit the PRACH N times on the RACH RO associated with the second signal if the number of forwarding beams is N without further distinguishing the RO corresponding to the first signal.

It should be noted that the first device may transmit the third signal N times according to the transmission resource associated with the second signal corresponding to the target signal, and the powers may be identical or different in the N transmissions of the third signal, and the beam directions may be identical or different in the the N transmissions of the third signal.

With this method, the first device can transmit the third signal for multiple times using the transmission resource associated with the original beam, which is equivalent to repeated transmission of the third signal by different beams or the same beam direction, which can improve the probability of successful transmission of the third signal.

Hereinafter, the signal transmission method provided by the embodiment of the present disclosure will be described in detail by taking the initial access scenario as an example.

It should be understood that in the initial access stage of the terminal device to the network, the network device periodically transmits SSB burst sets in a beam scanning manner, that is, the network device transmits different SSBs on different beams in a time division multiplexing manner, and the terminal device measures the SSBs and selects the strongest beam to initiate a random access procedure. However, since the RIS device adopts analog beam forwarding mode of time division multiplexing, the available effective RO of the terminal device enables the downlink signal reception of the terminal device to be maximized when the SSB beam is directed to the RIS device, and the forwarding beam of the RIS device is directed to the terminal device. Referring to FIG. 4, the original beam corresponding to the second signal 1 + the forwarding beam corresponding to the first signal 2 can maximize the reception quality. Similarly, the RO associated with the SSB beam also has such requirements. At this time, how the terminal device determines the resources of the SSB and the PRACH in the access procedure is a problem that needs to be solved.

In this application scenario, the network device may directly transmit a second SSB burst set (including multiple second SSBs, respectively corresponding to different original beams), and the RIS device may forward the second SSB burst set and transmit the first SSB burst set (including multiple first SSBs, respectively corresponding to different forwarding beams) to the terminal device.

In an embodiment, the period of the first SSB burst set is different from the period of the second SSB burst set.

If the period of the second SSB burst set is m time units and the number of SSBs included in the first SSB burst set is n, the maximum period of the first SSB burst set is m*n time units.

The time unit may be a slot, a frame, a half frame, a subframe, or the like.

As can be understood, with reference to FIG. 4, the RIS device may first forward the second SSB burst set (i.e., the second burst set in FIG. 4) in the beam direction corresponding to the forwarding beam 1, and then forward the second SSB burst set (i.e., the second burst set in FIG. 4) in the beam direction corresponding to the forwarding beam 2.

Accordingly, the terminal device measures multiple first SSBs and multiple second SSBs and determines whether the selected SSB is the SSB corresponding to the forwarding beam 1 or the SSB corresponding to the forwarding beam 2.

The first SSB and/or the second SSB may be used for:
The terminal device acquires timing information (acquiring a TA value),
Radio Resource Management (RRM) measurement;
Radio Link Monitoring (RLM) measurement;
Beam Failure Detection (BFD) measurement; and
Layer 1 Reference Signal Received Power (L1-RSRP) measurement.

With this method, the period of the SSB burst set can be increased to perform beam scanning for the beam forwarded by the RIS device, and the terminal device can find one or more SSBs with the strongest quality through measurement.

In another embodiment, the time domain resources of the first SSB burst set are completely identical to those of the second SSB burst set, and the frequency domain resources of the first SSB are different from the frequency domain resources of the second SSB.

Note that the time domain resources of the first SSB burst set being completely identical to those of the second SSB burst set can be understood that the time domain resources occupied by multiple first SSBs in the first SSB burst set are the same as the time domain resources occupied by the multiple second SSBs in the second SSB burst set.

Optionally, when the number p of the first SSBs included in a half frame corresponding to the first SSB burst set is equal to the number q of the second SSBs included in the second SSB burst set, the first SSBs may have a one-to-one correspondence with the second SSB.

Alternatively, when the number p of the first SSBs (forwarding beams) included in the half frame corresponding to the first SSB burst set is not equal to the number q of the second SSBs (original beams) included in the half frame corresponding to the second SSB burst set, for example, q is less than p, multiple candidate second SSBs correspond to the same first SSB.

The frequency domain location of the first SSB burst set may be determined based on one or more of:
a first frequency domain location;
a frequency domain position and a first frequency domain offset of a second SSB burst set;
a frequency domain position and a second frequency domain offset of the downlink BWP; and
a bandwidth part corresponding to the second SSB.

The above-described parameters may be configured by the first configuration information.

It can be understood that the first SSB and the second SSB overlap in the time domain, and the period of the SSB burst set is not increased, and the terminal device can find one or more SSBs having the strongest quality through measurement without increasing the access delay.

In the embodiment of the present disclosure, the terminal device may measure the above SSBs and transmit the PRACH through the RO associated with the SSB having the best signal quality.

In an embodiment, the terminal device may transmit the PRACH based on the RACH RO associated with the first SSB. As shown in FIG. 9, the first device transmits the PRACH at the RO corresponding to the SSB1 + forwarding beam 1.

It should be noted that in the related art, only the association relationship between the second SSB and the RACH RO is specified, and how to further distinguish the q first SSBs is not further specified, and the following rules can further distinguish the RACH RO corresponding to the q first SSBs.

In a possible implementation, different first SSBs (forwarding beams) correspond to different ROs. For example, if one second SSB corresponds to multiple ROs, each RO may correspond to a different first SSB (i.e., a forwarding beam). If one second SSB may be associated with four ROs, and the number of ROs for frequency division multiplexing in one time instance is four, every two ROs may be associated with one first SSB with taking the first SSB burst set including two first SSBs as an example.

In another possible implementation, different first SSBs (forwarding beams) correspond to different sequences. For example, if one second SSB corresponds to one RO and corresponds to multiple preambles, the preambles are grouped, and different first SSBs (forwarding beams) may correspond to different preamble indexes or index sets. For example, one second SSB correspond to 32 preambles, and with taking the first SSB burst set including two first SSBs as an example, the preamble index corresponding to one first SSB ranges from 0 to 15, and the preamble index corresponding to the other first SSB ranges from 16 to 31.

In an embodiment, the network may employ k bits to indicate the RO or preamble index corresponding to the first SSB (forwarding beam).

According to the above method, the terminal device transmits the PRACH only on the RO corresponding to the measured forwarding beam, thereby accurately reporting the beam in which the terminal device is located.

In an embodiment, the terminal device may transmit the PRACH based on the RACH RO associated with the second SSB. As shown in FIG. 10, without distinguishing the RO corresponding to the first SSB, if the number of the first SSB in the first SSB burst set is q (that is, the number of forwarding beams is q), the PRACH is transmitted q times on the RACH RO associated with the second SSB.

The power may be identical or different in the q transmissions of the PRACH, and the beam directions may be identical or different in the q transmissions of the PRACH.

In this embodiment, the terminal device may transmit the PRACH multiple times, which corresponds to repeated transmission of the PRACH in different beams or the same beam direction, thereby raising the probability of successful transmission of the PRACH.

The preferred embodiments of the present disclosure have been described in detail above with reference to the accompanying drawings, but the present disclosure is not limited to the specific details in the above-described embodiments. Within the scope of the technical concept of the present disclosure, various simple modifications can be made to the technical solutions of the present disclosure, and these simple modifications all fall within the scope of protection of the present disclosure. For example, various specific technical features described in the above-described embodiments can be combined in any suitable manner without contradiction, and various possible combinations will not be described separately in the present disclosure in order to avoid unnecessary repetition. For example, various embodiments of the present disclosure may be combined arbitrarily, and as long as they do not violate the idea of the present disclosure, they should also be regarded as the disclosure of the present disclosure. For another example, on the premise that there is no conflict, various embodiments described in the present disclosure and/or the technical features in the embodiments can be arbitrarily combined with the prior art, and the technical solution obtained after the combination should also fall within the scope of protection of the present disclosure.

It should also be understood that in various method embodiments of the present disclosure, the size of the sequence number of the above-described processes does not mean the sequence of execution, and the sequence of execution of each process should be determined by its function and internal logic, and should not constitute any limitation on the implementation of the embodiments of the present disclosure. In addition, in the embodiment of the present disclosure, the terms "downlink", "uplink", and "sidelink" are used to indicate the transmission direction of the signals or data, the "downlink" indicates that the transmission direction of the signals or data is a first direction transmitted from the site to the user equipment of the cell, "uplink" indicates that the transmission direction of the signals or data is a second direction transmitted from the user equipment of the cell to the site, and "sidelink" indicates that the transmission direction of the signals or data is a third direction transmitted from the user equipment 1 to the user equipment 2. For example, "downlink signal" indicates that the transmission direction of the signal is the first direction. In addition, in the embodiment of the present disclosure, the term "and/or" is only one kind of association relationship describing associated objects, and indicates that there may be three kinds of relationships. Specifically, A and/or B may represent three cases of A alone, A and B simultaneously, and B alone. In addition, the character "/" herein generally indicates that the previous and subsequent objects are in an "or" relationship.

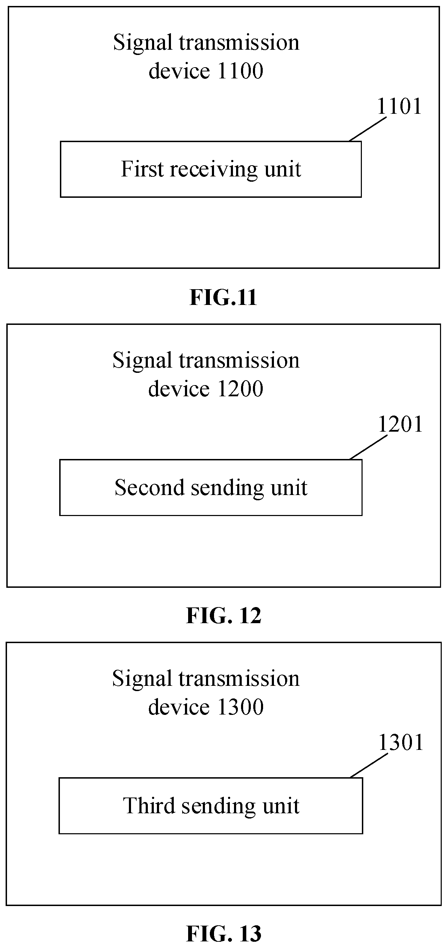

FIG. 11 is a schematic structural diagram of a composition of a signal transmission device 1100 provided by an embodiment of the present disclosure, and the signal transmission device is applied to a first device. As shown in FIG. 11, the signal transmission device 1100 includes a first receiving unit 1101.

The first receiving unit 1101 is configured to detect a first signal based on a first transmission resource. The first signal is a signal transmitted after the second signal transmitted by the second device is reflected and/or refracted by the third device. The second signal is detected on a second transmission resource. The first transmission resource is different from the second transmission resource.

In some embodiments, a time domain resource of the first transmission resource is different from a time domain resource of the second transmission resource; and/or a frequency domain resource of the first transmission resource is different from a frequency domain resource of the second transmission resource.

In some embodiments, the first transmission resource includes a first time period and the second transmission resource includes a second time period. The first time period is a period of a first burst set corresponding to the first signal, and the second time period is a period of a second burst set corresponding to the second signal.

The first transmission resource being different from the second transmission resource includes that the first time period is different from the second time period.

In some embodiments, the first time period is determined based on the second time period and the number of first signals included in the first burst set.

In some embodiments, the frequency domain resource of the first transmission resource is different from the frequency domain resource of the second transmission resource, and a frequency domain location of the first transmission resource is determined based on one or more of:
a first frequency domain location;
a first frequency domain offset and a frequency domain location of the second transmission resource;
a second frequency domain offset and a frequency domain location of a downlink bandwidth part; and
a bandwidth part corresponding to the second signal.

In some embodiments, a time domain resource of the first transmission resource is the same as a time domain resource of the second transmission resource, and multiple first signals included in a first burst set corresponding to the first signal have a correspondence relationship with multiple second signals included in a second burst set corresponding to the second signal.

In some embodiments, in case that the number of the multiple first signals included in the first burst set is the same as the number of the multiple second signals included in the second burst set, the multiple first signals have a one-to-one correspondence with the multiple second signals.

In some embodiments, in case that the number of the multiple first signals included in the first burst set is different from the number of the multiple second signals included in the second burst set, one or more first signals in the first burst set are associated with one second signal in the second burst set, or the one or more second signals in the second burst set are associated with one first signal in the first burst set.

In some embodiments, the first receiving unit 1101 is further configured to receive first configuration information which is used to determine the first transmission resource.

In some embodiments, the first configuration information indicates one or more of:
the number of multiple first signals included in a first burst set corresponding to the first signal;
a second time period of a second burst set corresponding to the second signal;
a first frequency domain location of the first transmission resource;
a first frequency domain offset between a frequency domain location of the first transmission resource and a frequency domain location of the second transmission resource;
a second frequency domain offset between a frequency domain location of the first transmission resource and a frequency domain location of a downlink bandwidth part; and
a bandwidth part corresponding to the second signal.

In some embodiments, the signal transmission device 1100 provided by the embodiment of the present disclosure further includes a first transmitting unit. The first transmitting unit may be configured to transmit a third signal based on a target transmission resource associated with a target signal. The target signal is one or more first signals detected by the first device, and/or one or more second signals, meeting a first condition, detected by the first device.

In some embodiments, when the second signal can be detected by the first device, and if a measurement result of one or more second signals detected by the first device is greater than or equal to a first threshold, the target signal is a signal meeting a first condition among the one or more second signals detected by the first device.

In some embodiments, when the second signal can be detected by the first device, if the measurement result of the one or more second signals detected by the first device is greater than or equal to a first threshold, and the measurement result of the one or more first signals is greater than or equal to a second threshold, the target signal is a signal meeting a first condition among the one or more second signals detected by the first device.

In some embodiments, when the second signal can be detected by the first device, if the measurement result of the one or more second signals detected by the first device is less than a first threshold, and the measurement result of the one or more first signals detected by the first device is greater than or equal to the second threshold, the target signal is a signal meeting a first condition among the one or more first signals detected by the first device.

In some embodiments, where the target signal is any one of one or more first signals detected by the first device, the target transmission resource is determined based on any one of:
a preset rule;
second configuration information, the second configuration information is used to configure respective transmission resources associated with the one or more first signals; and
a transmission resource associated with a second signal corresponding to the target signal.

In some embodiments, the preset rule includes the following.

The target transmission resource is any transmission resource in the first transmission resource group among multiple transmission resource groups associated with the second signal corresponding to the target signal. The first transmission resource group is a transmission resource group associated with the target signal.

In some embodiments, when the target transmission resource is a transmission resource associated with a second signal corresponding to the target signal, the first transmitting unit is further configured to transmit a third signal N times based on the target transmission resource. N is the number of candidate first signals in the first burst set corresponding to the first signal.

In some embodiments, the target transmission resource includes a transmission occasion and/or a preamble sequence.

In some embodiments, the first signal and the second signal are any one of: a Synchronization signal block SSB, and a channel state information reference signal CSI-RS.

FIG. 12 is a schematic structural diagram of a composition of the signal transmission device 1200 provided by the embodiment of the present disclosure, and the signal transmission device is applied to the second device. As shown in FIG. 12, the signal transmission device 1200 includes a second transmitting unit 1201.

The second transmission unit 1201 is configured to transmit a second signal on a second transmission resource. The second transmission resource is different from a first transmission resource, and the first transmission resource is used for transmitting a first signal, and the first signal is a signal transmitted after the second signal is reflected and/or refracted by a third device.

In some embodiments, a time domain resource of the first transmission resource is different from a time domain resource of the second transmission resource; and/or a frequency domain resource of the first transmission resource is different from a frequency domain resource of the second transmission resource.

In some embodiments, the first transmission resource includes a first time period and the second transmission resource includes a second time period. The first time period is a period of a first burst set corresponding to the first signal, and the second time period is a period of a second burst set corresponding to the second signal.

The first transmission resource being different from the second transmission resource includes that the first time period is different from the second time period.

In some embodiments, the first time period is determined based on the second time period and the number of first signals included in the first burst set.

In some embodiments, the frequency domain resource of the first transmission resource is different from the frequency domain resource of the second transmission resource, and a frequency domain location of the first transmission resource is determined based on one or more of:
a first frequency domain location;
a first frequency domain offset and a frequency domain location of the second transmission resource;
a second frequency domain offset and a frequency domain location of a downlink bandwidth part; and
a bandwidth part corresponding to the second signal.

In some embodiments, a time domain resource of the first transmission resource is the same as a time domain resource of the second transmission resource, and multiple first signals included in a first burst set corresponding to the first signal have a correspondence relationship with multiple second signals included in a second burst set corresponding to the second signal.

In some embodiments, in case that the number of the multiple first signals included in the first burst set is the same as the number of the multiple second signals included in the second burst set, the multiple first signals have a one-to-one correspondence with the multiple second signals.

In some embodiments, in case that the number of the multiple first signals included in the first burst set is different from the number of the multiple second signals included in the second burst set, one or more first signals in the first burst set are associated with one second signal in the second burst set, or the one or more second signals in the second burst set are associated with one first signal in the first burst set.

In some embodiments, the second transmitting unit 1201 is further configured to transmit first configuration information to the first device. The first configuration information is used to determine the first transmission resource.

In some embodiments, the first configuration information indicates one or more of:
the number of multiple first signals included in a first burst set corresponding to the first signal;
a second time period of a second burst set corresponding to the second signal;
a first frequency domain location of the first transmission resource;
a first frequency domain offset between a frequency domain location of the first transmission resource and a frequency domain location of the second transmission resource;
a second frequency domain offset between a frequency domain location of the first transmission resource and a frequency domain location of a downlink bandwidth part; and
a bandwidth part corresponding to the second signal.

In some embodiments, the signal transmission device 1200 further includes a second receiving unit. The second receiving unit is configured to receive capability information transmitted by the third device. The capability information indicates spatial relationship information of the third device. The first configuration information is determined based on the capability information.

In some embodiments, the capability information includes one or more of:
a phase of each RIS unit in the third device;
a beam set of reflected signals or refracted signals of the third device;
a beamforming pattern of the reflected signals or the refracted signals of the third device; and
a polarization manner of the reflected or refracted signals.

In some embodiments, the second receiving unit is further configured to receive a third signal transmitted by the first device. The third signal is received on the target transmission resource. The second device determines beam information corresponding to the first device based on the target transmission resource.

In some embodiments, the first signal and the second signal are any one of: a Synchronization signal block SSB, and a channel state information reference signal CSI-RS.

FIG. 13 is a schematic structural diagram of a composition of a signal transmission device 1300 provided by the embodiment of the present disclosure, and the signal transmission device 1300 is applied to a third device. As shown in FIG. 13, the signal transmission device 1300 includes a third transmitting unit 1301.

The third transmitting unit 1301 is configured to transmit a first signal on a first transmission resource. The first signal is a signal transmitted after a second signal transmitted by a second device is reflected and/or refracted by a third device. The second signal is detected on a second transmission resource. The first transmission resource is different from the second transmission resource.

In some embodiments, a time domain resource of the first transmission resource is different from a time domain resource of the second transmission resource; and/or, the frequency domain resource of the first transmission resource is different from the frequency domain resource of the second transmission resource.

In some embodiments, the first transmission resource includes a first time period and the second transmission resource includes a second time period. The first time period is a period of a first burst set corresponding to the first signal, and the second time period is a period of a second burst set corresponding to the second signal.

The first transmission resource being different from the second transmission resource includes that the first time period is different from the second time period.

In some embodiments, the first time period is determined based on the second time period and the number of first signals included in the first burst set.

In some embodiments, the frequency domain resource of the first transmission resource is different from the frequency domain resource of the second transmission resource, and a frequency domain location of the first transmission resource is determined based on one or more of:
a first frequency domain location;
a first frequency domain offset and a frequency domain location of the second transmission resource;
a second frequency domain offset and a frequency domain location of a downlink bandwidth part; and
a bandwidth part corresponding to the second signal.

In some embodiments, a time domain resource of the first transmission resource is the same as a time domain resource of the second transmission resource, and multiple first signals included in a first burst set corresponding to the first signal have a correspondence relationship with multiple second signals included in a second burst set corresponding to the second signal.

In some embodiments, in case that the number of the multiple first signals included in the first burst set is the same as the number of the multiple second signals included in the second burst set, the multiple first signals have a one-to-one correspondence with the multiple second signals.

In some embodiments, in case that the number of the multiple first signals included in the first burst set is different from the number of the multiple second signals included in the second burst set, one or more first signals in the first burst set are associated with one second signal in the second burst set, or the one or more second signals in the second burst set are associated with one first signal in the first burst set.

In some embodiments, the signal transmission device 1300 further includes a third receiving unit configured to receive first configuration information which is used for determining the first transmission resource.

In some embodiments, the first configuration information indicates one or more of:
the number of multiple first signals included in a first burst set corresponding to the first signal;
a second time period of a second burst set corresponding to the second signal;
a first frequency domain location of the first transmission resource;
a first frequency domain offset between a frequency domain location of the first transmission resource and a frequency domain location of the second transmission resource;
a second frequency domain offset between a frequency domain location of the first transmission resource and a frequency domain location of a downlink bandwidth part; and
a bandwidth part corresponding to the second signal.

In some embodiments, the third transmitting unit 1301 is further configured to transmit capability information to the second device. The capability information indicates spatial relationship information of the third device. The first configuration information is determined based on the capability information.

In some embodiments, the capability information includes one or more of:
a phase of each RIS unit in the third device;
a beam set of reflected signals or refracted signals of the third device;
a beamforming pattern of the reflected signals or the refracted signals of the third device; and
a polarization manner of the reflected or refracted signals.

In some embodiments, the first signal and the second signal are any one of: a Synchronization signal block SSB, and a channel state information reference signal CSI-RS.

Those skilled in the art should understand that the related description of the above-described information transmission device according to the embodiment of the present disclosure can be understood with reference to the related description of the information transmission method according to the embodiment of the present disclosure.

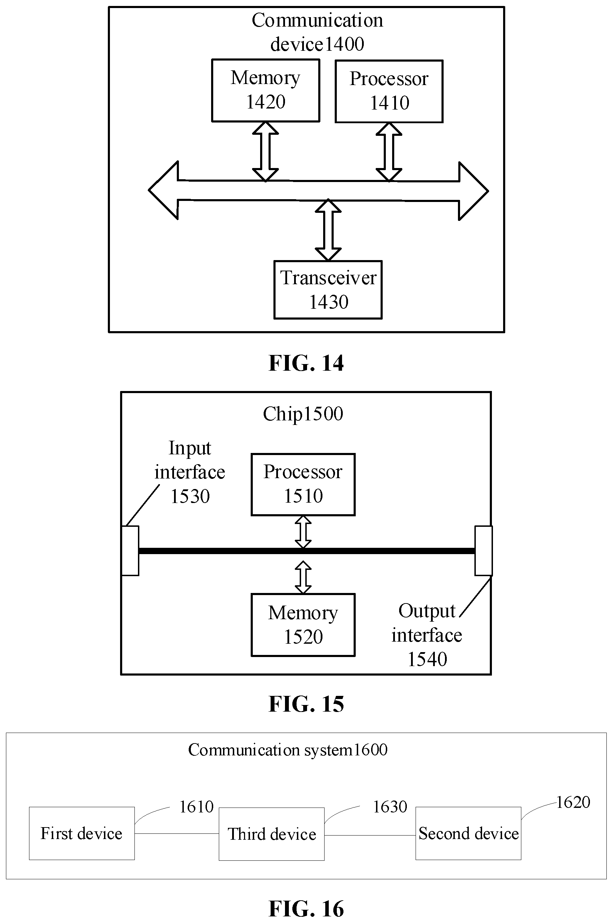

FIG. 14 is a schematic structural diagram of a communication device 1400 according to an embodiment of the present disclosure. The communication device may be a terminal device or a network device. The communication device 1400 illustrated in FIG. 14 includes a processor 1410, and the processor 1410 can call and run a computer program from a memory to implement the method in the embodiment of the present disclosure.

Optionally, as shown in FIG. 14, the communication device 1400 may further include a memory 1420. The processor 1410 may call and run a computer program from the memory 1420 to implement the method in the embodiment of the present disclosure.

The memory 1420 may be a separate device independent of the processor 1410, or may be integrated into the processor 1010.

Optionally, as shown in FIG. 14, the communication device 1400 may further include a transceiver 1430, and the processor 1410 may control the transceiver 1430 to communicate with other devices, specifically, to transmit information or data to other devices, or receive information or data transmitted by other devices.

Here, the transceiver 1430 may include a transmitter and a receiver. The transceiver 1430 may further include antennas, and the number of antennas may be one or more.

Optionally, the communication device 1400 may be the first device according to the embodiment of the present disclosure, and the communication device 1400 may implement operations implemented by the first device in various methods according to the embodiment of the present disclosure, and will not be described herein for the sake of brevity.

Optionally, the communication device 1400 may be the second device of the embodiment of the present disclosure, and the communication device 1400 may implement operations implemented by the second device in various methods of the embodiment of the present disclosure, and will not be described herein for the sake of conciseness.

Optionally, the communication device 1400 may be the third device according to the embodiment of the present disclosure, and the communication device 1400 may implement operations implemented by the third device in various methods of the embodiment of the present disclosure, and will not be described herein for the sake of brevity.

FIG. 15 is a schematic structural diagram of a chip according to an embodiment of the present disclosure. The chip 1500 shown in FIG. 15 includes a processor 1510, which can call and run a computer program from a memory to implement the method in the embodiment of the present disclosure.

Optionally, as shown in FIG. 15, the chip 1500 may further include a memory 1520. The processor 1510 may call and run a computer program from the memory 1520 to implement the method in the embodiment of the present disclosure.

The memory 1520 may be a separate device independent of the processor 1510 or may be integrated in the processor 1510.

Optionally, the chip 1500 may further include an input interface 1530. The processor 1510 may control the input interface 1530 to communicate with other devices or chips, specifically, to acquire information or data transmitted by other devices or chips.

Optionally, the chip 1500 may further include an output interface 1540. The processor 1510 may control the output interface 1540 to communicate with other devices or chips, specifically, to output information or data to other devices or chips.

Optionally, the chip can be applied to the first device in the embodiment of the present disclosure, and the chip can implement the operations implemented by the first device in various methods of the embodiment of the present disclosure, and will not be repeatedly described here for the sake of simplicity.

Optionally, the chip can be applied to the second device in the embodiment of the present disclosure, and the chip can implement the operations implemented by the second device in various methods of the embodiment of the present disclosure, and will not be repeatedly described here for the sake of simplicity.

Optionally, the chip can be applied to the third device in the embodiment of the present disclosure, and the chip can implement the operations implemented by the third device in various methods of the embodiment of the present disclosure, and will not be repeatedly described here for the sake of brevity.

It should be understood that the chip mentioned in the embodiments of the present disclosure may also be referred to as a system level chip, a system chip, a chip system, or system-on-chip.

An embodiment of the present disclosure also provides a computer storage medium, on which one or more programs are stored, and the one or more programs can be executed by one or more processors to implement the method in the embodiment of the present disclosure.

FIG. 16 is a schematic block diagram of a communication system 1600 according to an embodiment of the present disclosure. As shown in FIG. 16, the communication system 1600 includes a first device 1610, a second device 1620, and a third device 1630.

The first device 1610 may be used to implement the corresponding functions implemented by the first device in the above-described method, the second device 1620 may be used to implement the corresponding functions implemented by the second device in the above-described method, and the third device 1630 may be used to implement the corresponding functions implemented by the third device in the above-described method.

It should be understood that the processor of the embodiment of the present disclosure may be an integrated circuit chip having signal processing capabilities. In the implementation process, the operations of the above-described method embodiments may be implemented by integrated logic circuits of hardware in the processor or instructions in the form of software. The processor described above may be a general-purpose processor, a Digital Signal Processor (DSP), an Application Specific Integrated Circuit (ASIC), an Field Programmable Gate Array (FPGA) or other programmable logic device, a discrete gate or a transistor logic device, or a discrete hardware component. The methods, steps, and logical block diagrams disclosed in the embodiments of the present disclosure may be implemented or executed. The general-purpose processor may be a microprocessor or the processor may be any conventional processor or the like. The steps of the method disclosed in connection with the embodiments of the present disclosure may be directly embodied to be executed by the hardware decoding processor, or may be executed by combining hardware and software modules in the decoding processor. The software module may be located in a storage medium mature in the art, such as a random access memory, a flash memory, a read-only memory, a programmable read-only memory, or an electrically erasable programmable memory, a register, etc. The storage medium is located in the memory, and the processor reads the information in the memory, and combines hardware thereof to implement the steps of the above method.

It is understood that the memory in the embodiments of the present disclosure may be a volatile memory or a non-volatile memory, or may include both volatile and non-volatile memory. The non-volatile memory may be a Read-Only Memory (ROM), a Programmable ROM (PROM), an Erasable PROM (EPROM), an Electrically EPROM (EEPROM), or a flash memory. The volatile memory may be a Random Access Memory (RAM), which serves as an external cache. By way of illustration, but not by way of limitation, many forms of RAMs are available, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM), and a Direct Rambus RAM (DR RAM). It should be noted that the memory of the systems and methods described herein is intended to include, but is not limited to, these and any other suitable type of memory.

It should be understood that the above memory is illustrative but restrictive, for example, the memory in the embodiments of the present disclosure may also be a static random access memory (SRAM), a dynamic random access memory (DRAM), a synchronous dynamic random access memory (SDRAM), a double data rate synchronous dynamic random access memory (DDR SDRAM), an enhanced SDRAM (ESDRAM), a synch link dynamic random access memory (SLDRAM), a Direct Rambus RAM (DR RAM), and the like. That is, the memory in the embodiments of the present disclosure is intended to include, but is not limited to, these and any other suitable type of memory.

The embodiments of the present disclosure further provide a computer-readable storage medium for storing a computer program.

Optionally, the computer-readable storage medium can be applied to the network device in the embodiment of the present disclosure, and the computer program causes the computer to execute the corresponding operations implemented by the network device in various methods in the embodiment of the present disclosure, and the description thereof will not be repeated here for the sake of brevity.

Optionally, the computer-readable storage medium can be applied to the mobile terminal/terminal device in the embodiment of the present disclosure, and the computer program causes the computer to execute the corresponding operations implemented by the mobile terminal/terminal device in various methods of the embodiment of the present disclosure, and will not be repeated here for the sake of brevity.

The embodiments of the present disclosure also provide a computer program product including computer program instructions.

Optionally, the computer program product can be applied to the network device in the embodiment of the present disclosure, and the computer program instructions cause the computer to execute the corresponding operations implemented by the network device in various methods in the embodiment of the present disclosure, and the description thereof is not repeated here for the sake of brevity.

Optionally, the computer program product can be applied to the mobile terminal/terminal device in the embodiment of the present disclosure, and the computer program instructions cause the computer to execute the corresponding operations implemented by the mobile terminal/terminal device in various methods of the embodiment of the present disclosure, and will not be repeated here for the sake of brevity.

The embodiments of the present disclosure also provide a computer program.

Optionally, the computer program can be applied to the network device in the embodiment of the present disclosure, and when the computer program is run on the computer, the computer executes the corresponding operations implemented by the network device in various methods of the embodiment of the present disclosure, and the description thereof is not repeated here for the sake of brevity.

Optionally, the computer program can be applied to the mobile terminal/terminal device in the embodiment of the present disclosure, and when the computer program is run on the computer, the computer executes the corresponding operations implemented by the mobile terminal/terminal device in various methods of the embodiment of the present disclosure, and will not be repeated here for the sake of brevity.

Those of ordinary skill in the art will appreciate that the elements and algorithmic steps of the various examples described in connection with the embodiments disclosed herein can be implemented in electronic hardware, or a combination of computer software and electronic hardware. Whether these functions are performed in hardware or software depends on the specific application and design constraints of the technical solution. Those skilled in the art may use different methods for implementing the described functions for each particular application, but such implementations should not be considered beyond the scope of the present disclosure.

Those skilled in the art can clearly understand that, for convenience and conciseness of the description, the specific operation processes of the systems, devices, and units described above are not repeatedly described by referring to the corresponding processes in the above-described method embodiments.

In the embodiments provided herein, it should be understood that the disclosed systems, apparatuses and methods may be implemented in other ways. For example, the device embodiments described above are merely schematic, for example, the division of units is only one logical function division, and there may be other division methods in actual implementation. For example, multiple units or components may be combined or integrated into another system, or some features may be ignored or not implemented. In addition, the coupling or direct coupling or communication connection shown or discussed may be an indirect coupling or communication connection through some interface, device or unit, which may be electrical, mechanical or otherwise.

The units described as separate components may be or may not be physically separate, and the components displayed as units may or may not be physical units, that is, they may be located in one place or may be distributed over a plurality of network units. Some or all of the units may be selected according to actual needs to achieve the purpose of the solution of the present embodiment.

In addition, all the functional units in each embodiment of the present disclosure may be integrated in one processing unit, or may be physically present alone, or two or more units may be integrated in one unit.

The functions may be stored in a computer-readable storage medium if the functions are implemented in the form of software functional units and sold or used as independent products. Based on this understanding, an essential part or a part contributing to the prior art of the technical solution of the present disclosure or a part of the technical solution may be embodied in the form of a software product. The computer software product is stored in a storage medium and includes several instructions for causing a computer device (which may be a personal computer, a server, or a network device, etc.) to perform all or part of the steps of the method described in various embodiments of the present disclosure. The storage medium includes a USB disk, a removable hard disk, a Read-Only Memory (ROM), a Random Access Memory (RAM), a magnetic disk or an optical disk, or a medium that can store program codes.

The foregoing is merely a specific embodiment of the present disclosure, but the scope of protection of the present disclosure is not limited thereto, and changes or substitutions which can be easily conceived by any person skilled in the art within the technical scope disclosed in the present disclosure, should fall within the scope of protection of the present disclosure. Therefore, the scope of protection of the present disclosure should conform to the scope of protection of the claims.

## Claims

1. A signal transmission method, comprising:
detecting, by a first device, a first signal based on a first transmission resource, wherein the first signal is a signal transmitted after a second signal transmitted by a second device is reflected and/or refracted by a third device, the second signal is detected on a second transmission resource, and the first transmission resource is different from the second transmission resource.

2. The method of claim 1, wherein a time domain resource of the first transmission resource is different from a time domain resource of the second transmission resource; and/or,
a frequency domain resource of the first transmission resource is different from a frequency domain resource of the second transmission resource.

3. The method of claim 1 or 2, wherein the first transmission resource comprises a first time period, and the second transmission resource comprises a second time period, the first time period is a period of a first burst set corresponding to the first signal, and the second time period is a period of a second burst set corresponding to the second signal, and
the first transmission resource being different from the second transmission resource comprises that the first time period is different from the second time period.

4. The method of claim 3, wherein the first time period is determined based on the second time period and a number of first signals in the first burst set.

5. The method of any one of claims 1 to 4, wherein a frequency domain resource of the first transmission resource is different from a frequency domain resource of the second transmission resource, and a frequency domain location of the first transmission resource is determined based on one or more of:
a first frequency domain location;
a first frequency domain offset and a frequency domain location of the second transmission resource;
a second frequency domain offset and a frequency domain location of a downlink bandwidth part; or
a bandwidth part corresponding to the second signal.

6. The method of claim 5, wherein a time domain resource of the first transmission resource is the same as a time domain resource of the second transmission resource, and a plurality of first signals in a first burst set corresponding to the first signal have a correspondence relationship with a plurality of second signals in a second burst set corresponding to the second signal.

7. The method of claim 6, wherein in response to a number of the plurality of first signals in the first burst set being the same as the number of the plurality of second signals in the second burst set, the plurality of first signals have a one-to-one correspondence with the plurality of second signals.

8. The method of claim 6, wherein in response to a number of the plurality of first signals in the first burst set being different from a number of the plurality of second signals in the second burst set, one or more first signals in the first burst set are associated with one second signal in the second burst set, or one or more second signals in the second burst set are associated with one first signal in the first burst set.

9. The method of any one of claims 1 to 8, further comprising:
receiving, by the first device, first configuration information which is used for determining the first transmission resource.

10. The method of claim 9, wherein the first configuration information indicates one or more of:
a number of a plurality of first signals in a first burst set corresponding to the first signal;
a second time period of a second burst set corresponding to the second signal;
a first frequency domain location of the first transmission resource;
a first frequency domain offset between a frequency domain location of the first transmission resource and a frequency domain location of the second transmission resource;
a second frequency domain offset between a frequency domain location of the first transmission resource and a frequency domain location of a downlink bandwidth part; or
a bandwidth part corresponding to the second signal.

11. The method of any one of claims 1 to 10, further comprising:
transmitting, by the first device, a third signal based on a target transmission resource associated with a target signal,
wherein the target signal is one or more first signals detected by the first device, and/or one or more second signals, that meet a first condition, detected by the first device.

12. The method of claim 11, wherein,
in response to the second signal being able to be detected by the first device, if a measurement result of the one or more second signals detected by the first device is greater than or equal to a first threshold, the target signal is a signal meeting the first condition among the one or more second signals detected by the first device.

13. The method of claim 11, wherein,
in response to the second signal being able to be detected by the first device, if a measurement result of the one or more second signals detected by the first device is greater than or equal to a first threshold, and a measurement result of the one or more first signals is greater than or equal to a second threshold, the target signal is a signal meeting a first condition among the one or more second signals detected by the first device.

14. The method of any one of claims 11 to 13, wherein,
in response to the second signal being able to be detected by the first device, if the measurement result of the one or more second signals detected by the first device is less than a first threshold and the measurement result of the one or more first signals detected by the first device is greater than or equal to a second threshold, the target signal is a signal meeting a first condition among the one or more first signals detected by the first device.

15. The method of any one of claims 11 to 14, wherein in response to the target signal being any one of one or more first signals detected by the first device, the target transmission resource is determined based on any one of:
a preset rule;
second configuration information, the second configuration information being used to configure respective transmission resources associated with the one or more first signals; or
a transmission resource associated with a second signal corresponding to the target signal.

16. The method of claim 15, wherein the preset rule comprises:
the target transmission resource being any transmission resource in a first transmission resource group among a plurality of transmission resource groups associated with the second signal corresponding to the target signal, wherein the first transmission resource group is a transmission resource group associated with the target signal.

17. The method of claim 15, wherein in response to the target transmission resource being a transmission resource associated with the second signal corresponding to the target signal, the transmitting, by the first device, a third signal based on the target transmission resource associated with the target signal comprises:
transmitting, by the first device, a third signal N times based on the target transmission resource, N being the number of candidate first signals in the first burst set corresponding to the first signal.

18. The method of any one of claims 11 to 17, wherein,
the target transmission resource comprises a transmission occasion and/or a preamble sequence.

19. The method of any one of claims 1 to 18, wherein the first signal and the second signal are any one of:
a Synchronization signal block (SSB), or a channel state information reference signal (CSI-RS).

20. A signal transmission method, comprising:
transmitting, by a second device, a second signal on a second transmission resource, wherein the second transmission resource is different from a first transmission resource, and the first transmission resource is used for transmitting a first signal, and the first signal is a signal transmitted after the second signal is reflected and/or refracted by a third device.

21. The method of claim 20, wherein a time domain resource of the first transmission resource is different from a time domain resource of the second transmission resource; and/or,
a frequency domain resource of the first transmission resource is different from a frequency domain resource of the second transmission resource.

22. The method of claim 20 or 21, wherein the first transmission resource comprises a first time period, and the second transmission resource comprises a second time period, the first time period is a period of a first burst set corresponding to the first signal, and the second time period is a period of a second burst set corresponding to the second signal, and
the first transmission resource being different from the second transmission resource comprises that the first time period is different from the second time period.

23. The method of claim 22, wherein the first time period is determined based on the second time period and a number of first signals in the first burst set.

24. The method of any one of claims 20 to 23, wherein a frequency domain resource of the first transmission resource is different from a frequency domain resource of the second transmission resource, and a frequency domain location of the first transmission resource is determined based on one or more of:
a first frequency domain location;
a first frequency domain offset and a frequency domain location of the second transmission resource;
a second frequency domain offset and a frequency domain location of a downlink bandwidth part; or
a bandwidth part corresponding to the second signal.

25. The method of claim 24, wherein a time domain resource of the first transmission resource is the same as a time domain resource of the second transmission resource, and a plurality of first signals in a first burst set corresponding to the first signal have a correspondence relationship with a plurality of second signals in a second burst set corresponding to the second signal.

26. The method of claim 25, wherein in response to a number of the plurality of first signals in the first burst set being the same as the number of the plurality of second signals in the second burst set, the plurality of first signals have a one-to-one correspondence with the plurality of second signals.

27. The method of claim 25, wherein in response to a number of the plurality of first signals in the first burst set being different from a number of the plurality of second signals in the second burst set, one or more first signals in the first burst set are associated with one second signal in the second burst set, or one or more second signals in the second burst set are associated with one first signal in the first burst set.

28. The method of any one of claims 20 to 27, further comprising:
transmitting, by the second device, first configuration information to the first device, wherein the first configuration information is used to determine the first transmission resource.

29. The method of claim 28, wherein the first configuration information indicates one or more of:
a number of a plurality of first signals in a first burst set corresponding to the first signal;
a second time period of a second burst set corresponding to the second signal;
a first frequency domain location of the first transmission resource;
a first frequency domain offset between a frequency domain location of the first transmission resource and a frequency domain location of the second transmission resource;
a second frequency domain offset between a frequency domain location of the first transmission resource and a frequency domain location of a downlink bandwidth part; or
a bandwidth part corresponding to the second signal.

30. The method of any of claims 28 or 29, further comprising:
receiving, by the second device, capability information transmitted by the third device, wherein the capability information indicates spatial relationship information of the third device, and the first configuration information is determined based on the capability information.

31. The method of claim 30, wherein the capability information comprises one or more of:
a phase of each RIS unit in the third device;
a beam set of a reflected signal or a refracted signal of the third device;
a beamforming pattern of the reflected signal or the refracted signal of the third device; or
a polarization manner of the reflected signal or the refracted signal.

32. The method of any one of claims 20 to 31, further comprising:
receiving, by the second device, a third signal transmitted by the first device, wherein the third signal is received on a target transmission resource; and
determining, by the second device, beam information corresponding to the first device based on the target transmission resource.

33. The method of any one of claims 20 to 32, wherein the first signal and the second signal are any of:
a Synchronization signal block (SSB), or a channel state information reference signal (CSI-RS).

34. A signal transmission method, comprising:
transmitting, by a third device, a first signal on a first transmission resource, wherein the first signal is a signal transmitted after a second signal transmitted by a second device is reflected and/or refracted by a third device, the second signal is detected on a second transmission resource, and the first transmission resource is different from the second transmission resource.

35. The method of claim 34, wherein a time domain resource of the first transmission resource is different from a time domain resource of the second transmission resource; and/or,
a frequency domain resource of the first transmission resource is different from a frequency domain resource of the second transmission resource.

36. The method of claim 35, wherein the first transmission resource comprises a first time period, and the second transmission resource comprises a second time period, the first time period is a period of a first burst set corresponding to the first signal, and the second time period is a period of a second burst set corresponding to the second signal, and
the first transmission resource being different from the second transmission resource comprises that the first time period is different from the second time period.

37. The method of claim 36, wherein the first time period is determined based on the second time period and a number of first signals in the first burst set.

38. The method of any one of claims 34 to 37, wherein a frequency domain resource of the first transmission resource is different from a frequency domain resource of the second transmission resource, and a frequency domain location of the first transmission resource is determined based on one or more of:
a first frequency domain location;
a first frequency domain offset and a frequency domain location of the second transmission resource;
a second frequency domain offset and a frequency domain location of a downlink bandwidth part; or
a bandwidth part corresponding to the second signal.

39. The method of claim 38, wherein a time domain resource of the first transmission resource is the same as a time domain resource of the second transmission resource, and a plurality of first signals in a first burst set corresponding to the first signal have a correspondence relationship with a plurality of second signals in a second burst set corresponding to the second signal.

40. The method of claim 39, wherein in response to a number of the plurality of first signals in the first burst set being the same as the number of the plurality of second signals in the second burst set, the plurality of first signals have a one-to-one correspondence with the plurality of second signals.

41. The method of claim 39, wherein in response to a number of the plurality of first signals in the first burst set being different from a number of the plurality of second signals in the second burst set, one or more first signals in the first burst set are associated with one second signal in the second burst set, or one or more second signals in the second burst set are associated with one first signal in the first burst set.

42. The method of any one of claims 34 to 41, wherein
receiving, by the third device, first configuration information which is used for determining the first transmission resource.

43. The method of claim 42, wherein the first configuration information indicates one or more of:
a number of a plurality of first signals in a first burst set corresponding to the first signal;
a second time period of a second burst set corresponding to the second signal;
a first frequency domain location of the first transmission resource;
a first frequency domain offset between a frequency domain location of the first transmission resource and a frequency domain location of the second transmission resource;
a second frequency domain offset between a frequency domain location of the first transmission resource and a frequency domain location of a downlink bandwidth part; or
a bandwidth part corresponding to the second signal.

44. The method of claim 42 or 43, further comprising:
transmitting, by the third device, capability information to the second device, wherein the capability information indicates spatial relationship information of the third device, and the first configuration information is determined based on the capability information.

45. The method of claim 44, wherein the capability information comprises one or more of:
a phase of each RIS unit in the third device;
a beam set of a reflected signal or a refracted signal of the third device;
a beamforming pattern of the reflected signal or the refracted signal of the third device; or
a polarization manner of the reflected signal or the refracted signal.

46. The method of any one of claims 34 to 45, wherein the first signal and the second signal are any of:
a Synchronization signal block (SSB), or a channel state information reference signal (CSI-RS).

47. A signal transmission device applied to a first device, comprising:
a first receiving unit configured to detect a first signal based on a first transmission resource, wherein the first signal is a signal transmitted after a second signal transmitted by a second device is reflected and/or refracted by a third device, the second signal is detected on a second transmission resource, and the first transmission resource is different from the second transmission resource.

48. A signal transmission device applied to a second device, comprising:
a second transmitting unit configured to transmit a second signal on a second transmission resource, wherein the second transmission resource is different from a first transmission resource, and the first transmission resource is used for transmitting a first signal, and the first signal is a signal transmitted after the second signal is reflected and/or refracted by a third device.

49. A signal transmission applied to a third device, comprising:
a third transmitting unit configured to transmit a first signal on a first transmission resource, wherein the first signal is a signal transmitted after a second signal transmitted by a second device is reflected and/or refracted by a third device, the second signal is detected on a second transmission resource, and the first transmission resource is different from the second transmission resource.

50. A communication device comprising: a memory, a processor, and a transceiver, wherein
the transceiver is configured for communication with a network device;
the memory is configured to store a computer program executable on the processor,
the processor implements the method of any one of claims 1 to 19, or claims 20 to 33, or claims 34 to 46 when executing the program in conjunction with the transceiver.

51. A computer storage medium having one or more program stored thereon, which are executed by one or more processors to implement that method of any one of claims 1 to 19, claims 20 to 33, or claims 34 to 46.

52. A chip comprise: a processor for invoking and executing a computer program from a memory to enable a device on which the chip is mounted to perform a method in any one of claims 1 to 19, or claims 20 to 33, or claims 34 to 46.

53. A computer program product comprise a computer storage medium having a computer program stored thereon, wherein the computer program comprises instructions executable by at least one processor that, when executed by the at least one processor, implement the method of any one of claims 1 to 19, or claims 20 to 33, or claims 34 to 46.

54. A computer program that cause a computer to perform the method of any one of claims 1 to 19, or of claims 20 to 33, or of claims 34 to 46.
